# EUROPEAN PATENT APPLICATION

(11) **EP 4 841 986 A1**
(43) Date of publication of application: **18.11.2026**
(21) Application number: 25737988.3
(22) Date of filing: 09.01.2025
(51) Int. Cl.: H04N 19/70, H04N 19/30, H04N 21/2343, H04N 21/436

(54) **METHOD FOR DECODING IMAGE INFORMATION, METHOD FOR ENCODING IMAGE INFORMATION, METHOD FOR STORING BITSTREAM OF IMAGE INFORMATION, AND METHOD FOR TRANSMITTING BITSTREAM OF IMAGE INFORMATION**

(30) Priority: 09.01.2024 US 202463618909 P; 23.01.2024 US 202463623817 P
(71) Applicant: LG Electronics Inc., Yeongdeungpo-gu Seoul 07336 (KR)
(72) Inventor: TAN, Hendry, Seoul 06772 (KR); NAM, Junghak, Seoul 06772 (KR); LIM, Jaehyun, Seoul 06772 (KR); KIM, Seunghwan, Seoul 06772 (KR)
(74) Representative: Frenkel, Matthias Alexander
(86) International application number: PCT/KR2025/000548
(87) International publication number: WO 2025/150945

(57) **Abstract**

Disclosed herein is a method for decoding image information, including obtaining the image information including supplemental enhancement information (SEI) processing order information indicating a processing order for a group of types of SEI messages, and determining the processing order based on the SEI processing order information, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

## Description

### [Technical Field]

The present disclosure relates to a method of decoding image information, a method of encoding image information, a method of storing a bitstream of image information, and/or a method of transmitting a bitstream of image information.

### [Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### [Disclosure]

### [Technical Problem]

The present disclosure provides an encoding/decoding method and/or device with improved encoding/decoding efficiency.

The present disclosure also provides handling of the presence of supplemental enhancement information (SEI) with prefix information of an SEI processing order SEI message for a coded video bitstream and SEI without the prefix information.

The present disclosure also classifies SEI messages that are included in an SEI processing order SEI message but are not included in a processing order nesting SEI message as different SEI messages.

The present disclosure also provides a method and/or computer-readable recording medium for storing a bitstream generated using an encoding method according to the present disclosure.

The present disclosure also provides a method and/or device for transmitting a bitstream generated using an encoding method according to the present disclosure.

The technical objects of the present disclosure are not limited to those described above, and other technical objects that have not been described may be obviously understood by those skilled in the art to which the present disclosure pertains from the following description.

### [Technical Solution]

According to one aspect of the present disclosure, a method for decoding image information, includes obtaining the image information including supplemental enhancement information (SEI) processing order information indicating a processing order for a group of types of SEI messages, and determining the processing order based on the SEI processing order information, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, an apparatus for decoding image information includes a memory and a processor coupled with the memory, wherein the processor is configured to obtain the image information including supplemental enhancement information (SEI) processing order information indicating a processing order for a group of types of SEI messages, and determine the processing order based on the SEI processing order information, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, a method for encoding image information, includes determining a processing order for a group of types of supplemental enhancement information (SEI) messages, generating SEI processing order information based on the processing order; and encoding the image information including the SEI processing order information, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, an apparatus for decoding image information includes a memory and a processor coupled with the memory, wherein the processor is configured to determine a processing order for a group of types of supplemental enhancement information (SEI) messages, generate SEI processing order information based on the processing order; and encode the image information including the SEI processing order information, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, a method for storing a bitstream of image information in a non-transitory computer-readable storage medium, includes obtaining the image information including supplemental enhancement information (SEI) processing order information indicating a processing order for a group of types of SEI messages; and storing data including the bitstream, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, a non-transitory computer-readable storage medium storing a bitstream of image information including supplemental enhancement information (SEI) processing order information indicating a processing order for a group of types of SEI messages, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, a method for transmitting a bitstream of image information, includes obtaining the image information including supplemental enhancement information (SEI) processing order information indicating a processing order for a group of types of SEI messages, and transmitting data including the bitstream, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

According to one aspect of the present disclosure, an apparatus for decoding image information includes a memory and a processor coupled with the memory, wherein the processor is configured to obtain the image information including supplemental enhancement information (SEI) processing order information indicating a processing order for a group of types of SEI messages, and transmit data including the bitstream, wherein the SEI processing order information includes payload type information indicating a type of an SEI message, prefix present information indicating whether prefix information of the SEI message is present or not, and processing order information indicating the processing order for the type of the SEI message, and wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

In the method/apparatus for decoding image information, the method/apparatus for encoding image information, the method/computer-readable storage medium for storing a bitstream of image information, or the method/apparatus for transmitting a bitstream of image information, the image information further includes processing order nesting information including position information of a specific SEI message within the processing order defined by the SEI processing order information, and when a SEI message whose prefix information is not present and type is a first type and which is not included in the processing order nesting information is included in SEI processing order information, no other SEI message whose prefix information is present and type is the first type and which is not included in the processing order nesting information is included in the SEI processing order information or the other SEI processing order information different from the SEI processing order information in the current CLVS.

In the method/apparatus for decoding image information, the method/apparatus for encoding image information, the method/computer-readable storage medium for storing a bitstream of image information, or the method/apparatus for transmitting a bitstream of image information, when a first SEI message whose prefix information is not present and type is a first type and which is not included in the processing order nesting information is included in SEI processing order information and a second SEI message whose prefix information is present and type is the first type and which is not included in the processing order nesting information is included in the SEI processing order information or the other SEI processing order information different from the SEI processing order information in the current CLVS, the first SEI message whose prefix information is not present and the second SEI message whose prefix information is present are treated independently.

In the method/apparatus for decoding image information, the method/apparatus for encoding image information, the method/computer-readable storage medium for storing a bitstream of image information, or the method/apparatus for transmitting a bitstream of image information, the second SEI message whose prefix information is present is excluded from a group of the first type of the first SEI message whose prefix information is not present.

In the method/apparatus for decoding image information, the method/apparatus for encoding image information, the method/computer-readable storage medium for storing a bitstream of image information, or the method/apparatus for transmitting a bitstream of image information, when a first SEI message whose prefix information is not present and type is a first type and which is not included in the processing order nesting information is included in SEI processing order information and a second SEI message whose prefix information is present and type is the first type and which is not included in the processing order nesting information is included in the SEI processing order information or the other SEI processing order information different from the SEI processing order information in the current CLVS, the second SEI message whose prefix information is present is treated as a part of the first SEI message whose prefix information is not present.

In the method/apparatus for decoding image information, the method/apparatus for encoding image information, the method/computer-readable storage medium for storing a bitstream of image information, or the method/apparatus for transmitting a bitstream of image information, the second SEI message whose prefix information is present is included in the other SEI processing order information different from the SEI processing order information which includes the first SEI message whose prefix information is not present.

The features of the present disclosure briefly summarized above are merely illustrative aspects of the detailed description of the present disclosure and do not limit the scope of the present disclosure.

### [Advantageous Effects]

According to the present disclosure it is possible to provide an encoding/decoding method and/or device with improved encoding/decoding efficiency.

According to the present disclosure it is possible to clearly determine and interpret whether an SEI message with prefix information and an SEI message without prefix information are included in or excluded from an SEI processing order SEI message.

According to the present disclosure it is possible to classify SEI messages that are included in an SEI processing order SEI message but are not included in a processing order nesting SEI message as different SEI messages.

According to the present disclosure, it is possible to provide a method and/or computer-readable recording medium for storing a bitstream generated using an encoding method according to the present disclosure.

According to the present disclosure it is possible to provide a method and/or device for transmitting a bitstream generated using an encoding method according to the present disclosure.

Effects that can be achieved from the present disclosure are not limited to those described above, and other effects that have not been described will be clearly understood by those of ordinary skill in the technical field to which the present disclosure pertains from the following description.

### [Description of Drawings]

FIG. 1 is a view schematically showing a video coding system to which an embodiment of the present disclosure is applicable.
FIG. 2 is a diagram schematically illustrating an image encoding device to which an embodiment according to the present disclosure can be applied.
FIG. 3 is a schematic diagram illustrating an image decoding device to which an embodiment according to the present disclosure can be applied.
FIG. 4 exemplarily shows a hierarchical structure for coded video/image to which an embodiment according to the present disclosure can be applied.
FIG. 5 is a drawing for explaining an interleaved method for deriving a luma channel.
FIG. 6 is a flowchart illustrating a method of decoding image information according to an embodiment of the present disclosure.
FIG. 7 is a flowchart illustrating a method of encoding image information according to an embodiment of the present disclosure.
FIG. 8 is a diagram exemplifying a content streaming system to which an embodiment according to the present disclosure can be applied.

### [Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

The present disclosure presents various embodiments of video/image coding, and unless otherwise stated, the embodiments may be performed in combination with each other.

The terms used in the present disclosure may have their usual meanings in the technical field to which the present disclosure belongs, unless newly defined in the present disclosure.

In the present disclosure, a "picture" generally means a unit representing one image of a specific time period, and a slice/tile is a coding unit constituting a part of a picture, and one picture may be composed of one or more slices/tiles. In addition, a slice/tile may include one or more CTUs (coding tree units). One picture may be composed of one or more tile groups. One tile group may include one or more tiles. A brick may represent a rectangular area of CTU rows of tiles in a picture. In this document, tile group and slice may be used interchangeably. For example, in this document, a tile group/tile group header may be called a slice/slice header.

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The chroma component block of the current block may be expressed by including an explicit description of a chroma component block such as "chroma block" or "current chroma block.

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

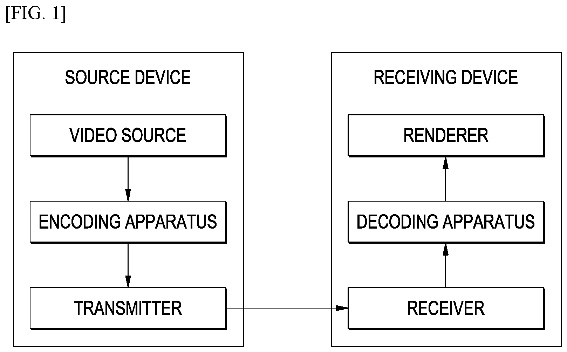

FIG. 1 illustrates an example of a video/image coding system to which the document of the present document may be applied.

Referring to FIG. 1, a video/image coding system may include a source device and a reception device. The source device may transmit encoded video/image information or data to the reception device through a digital storage medium or network in the form of a file or streaming

The source device may include a video source, an encoding apparatus, and a transmitter. The receiving device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display, and the display may be configured as a separate device or an external component.

The video source may acquire video/image through a process of capturing, synthesizing, or generating the video/image. The video source may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding apparatus may encode input video/image. The encoding apparatus may perform a series of processes such as prediction, transform, and quantization for compaction and coding efficiency. The encoded data (encoded video/image information) may be output in the form of a bitstream.

The transmitter may transmit the encoded image/image information or data output in the form of a bitstream to the receiver of the receiving device through a digital storage medium or a network in the form of a file or streaming The digital storage medium may include various storage mediums such as USB, SD, CD, DVD, Blu-ray, HDD, SSD, and the like. The transmitter may include an element for generating a media file through a predetermined file format and may include an element for transmission through a broadcast/communication network. The receiver may receive/extract the bitstream and transmit the received bitstream to the decoding apparatus.

The decoding apparatus may decode the video/image by performing a series of processes such as dequantization, inverse transform, and prediction corresponding to the operation of the encoding apparatus.

The renderer may render the decoded video/image. The rendered video/image may be displayed through the display.

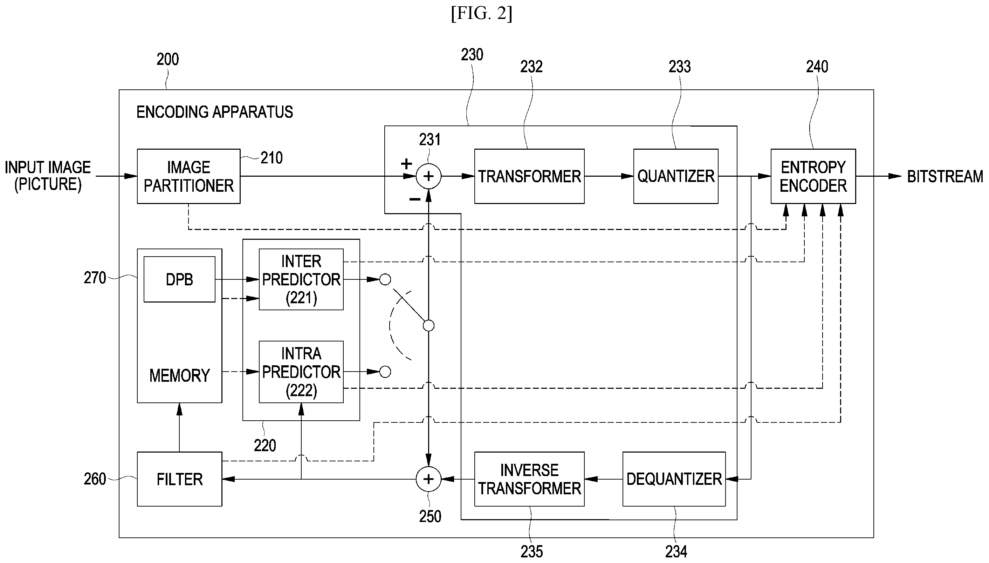

FIG. 2 is a diagram schematically illustrating an image encoding device to which an embodiment according to the present disclosure can be applied.

Referring to Fig. 2, the encoding apparatus 200 includes an image partitioner 210, a predictor 220, a residual processor 230, and an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, and an inverse transformer 235. The residual processor 230 may further include a subtractor 231. The adder 250 may be called a reconstructor or a reconstructed block generator. The image partitioner 210, the predictor 220, the residual processor 230, the entropy encoder 240, the adder 250, and the filter 260 may be configured by at least one hardware component (ex. an encoder chipset or processor) according to an embodiment. In addition, the memory 270 may include a decoded picture buffer (DPB) or may be configured by a digital storage medium. The hardware component may further include the memory 270 as an internal/external component.

The image partitioner 210 may partition an input image (or a picture or a frame) input to the encoding apparatus 200 into one or more processors. For example, the processor may be called a coding unit (CU). In this case, the coding unit may be recursively partitioned according to a quad-tree binary-tree ternary-tree (QTBTTT) structure from a coding tree unit (CTU) or a largest coding unit (LCU). For example, one coding unit may be partitioned into a plurality of coding units of a deeper depth based on a quad tree structure, a binary tree structure, and/or a ternary structure. In this case, for example, the quad tree structure may be applied first and the binary tree structure and/or ternary structure may be applied later. Alternatively, the binary tree structure may be applied first. The coding procedure according to this document may be performed based on the final coding unit that is no longer partitioned. In this case, the largest coding unit may be used as the final coding unit based on coding efficiency according to image characteristics, or if necessary, the coding unit may be recursively partitioned into coding units of deeper depth and a coding unit having an optimal size may be used as the final coding unit. Here, the coding procedure may include a procedure of prediction, transform, and reconstruction, which will be described later. As another example, the processor may further include a prediction unit (PU) or a transform unit (TU). In this case, the prediction unit and the transform unit may be split or partitioned from the aforementioned final coding unit. The prediction unit may be a unit of sample prediction, and the transform unit may be a unit for deriving a transform coefficient and/or a unit for deriving a residual signal from the transform coefficient.

The term unit may be used interchangeably with terms such as block or area, depending on the case. In general, an MxN block can represent a set of samples or transform coefficients consisting of M columns and N rows. A sample can generally represent a pixel or a pixel value, and may represent only a pixel/pixel value of a luma component, or only a pixel/pixel value of a chroma component. A sample can be used as a term corresponding to a pixel or pel in a picture (or image).

In the encoding apparatus 200, a prediction signal (predicted block, prediction sample array) output from the inter predictor 221 or the intra predictor 222 is subtracted from an input image signal (original block, original sample array) to generate a residual signal residual block, residual sample array), and the generated residual signal is transmitted to the transformer 232. In this case, as shown, a unit for subtracting a prediction signal (predicted block, prediction sample array) from the input image signal (original block, original sample array) in the encoder 200 may be called a subtractor 231. The predictor may perform prediction on a block to be processed (hereinafter, referred to as a current block) and generate a predicted block including prediction samples for the current block. The predictor may determine whether intra prediction or inter prediction is applied on a current block or CU basis. As described later in the description of each prediction mode, the predictor may generate various information related to prediction, such as prediction mode information, and transmit the generated information to the entropy encoder 240. The information on the prediction may be encoded in the entropy encoder 240 and output in the form of a bitstream.

The intra predictor 222 may predict the current block by referring to the samples in the current picture. The referred samples may be located in the neighborhood of the current block or may be located apart according to the prediction mode. In the intra prediction, prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra predictor 222 may determine the prediction mode applied to the current block by using a prediction mode applied to a neighboring block.

The inter predictor 221 may derive a predicted block for the current block based on a reference block (reference sample array) specified by a motion vector on a reference picture. Here, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 221 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter predictor 221 may use motion information of the neighboring block as motion information of the current block. In the skip mode, unlike the merge mode, the residual signal may not be transmitted. In the case of the motion vector prediction (MVP) mode, the motion vector of the neighboring block may be used as a motion vector predictor and the motion vector of the current block may be indicated by signaling a motion vector difference.

The predictor 220 may generate a prediction signal based on various prediction methods described below. For example, the predictor may not only apply intra prediction or inter prediction to predict one block but also simultaneously apply both intra prediction and inter prediction. This may be called combined inter and intra prediction (CIIP). In addition, the predictor may be based on an intra block copy (IBC) prediction mode or a palette mode for prediction of a block. The IBC prediction mode or palette mode may be used for content image/video coding of a game or the like, for example, screen content coding (SCC). The IBC basically performs prediction in the current picture but may be performed similarly to inter prediction in that a reference block is derived in the current picture. That is, the IBC may use at least one of the inter prediction techniques described in this document. The palette mode may be considered as an example of intra coding or intra prediction. When the palette mode is applied, a sample value within a picture may be signaled based on information on the palette table and the palette index.

The prediction signal generated by the predictor (including the inter predictor 221 and/or the intra predictor 222) may be used to generate a reconstructed signal or to generate a residual signal. The subtraction unit 115 can subtract the prediction signal (predicted block, predicted sample array) output from the prediction unit 200 from the input image signal (original block, original sample array) to generate a residual signal (residual block, residual sample array). The generated residual signal can be transmitted to the conversion unit 232.

The transformer 232 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform generated based on a prediction signal generated using all previously reconstructed pixels. In addition, the transform process may be applied to square pixel blocks having the same size or may be applied to blocks having a variable size rather than square.

The quantizer 233 may quantize the transform coefficients and transmit them to the entropy encoder 240 and the entropy encoder 240 may encode the quantized signal (information on the quantized transform coefficients) and output a bitstream. The information on the quantized transform coefficients may be referred to as residual information. The quantizer 233 may rearrange block type quantized transform coefficients into a one-dimensional vector form based on a coefficient scanning order and generate information on the quantized transform coefficients based on the quantized transform coefficients in the one-dimensional vector form. Information on transform coefficients may be generated.

The entropy encoder 240 may perform various encoding methods such as, for example, exponential Golomb, context-adaptive variable length coding (CAVLC), context-adaptive binary arithmetic coding (CABAC), and the like. The entropy encoder 240 may encode information necessary for video/image reconstruction other than quantized transform coefficients (ex. values of syntax elements, etc.) together or separately. Encoded information (ex. encoded video/image information) may be transmitted or stored in units of NALs (network abstraction layer) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In this document, information and/or syntax elements transmitted/signaled from the encoding apparatus to the decoding apparatus may be included in video/picture information. The video/image information may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 240 and/or a storage unit (not shown) storing the signal may be included as internal/external element of the encoding apparatus 200, and alternatively, the transmitter may be included in the entropy encoder 240.

The quantized transform coefficients output from the quantizer 233 may be used to generate a prediction signal. For example, the residual signal (residual block or residual samples) may be reconstructed by applying dequantization and inverse transform to the quantized transform coefficients through the dequantizer 234 and the inverse transformer 235.

Meanwhile, LMCS (luma mapping with chroma scaling) may be applied during the picture encoding and/or restoration process.

The adder 250 adds the reconstructed residual signal to the prediction signal output from the inter predictor 221 or the intra predictor 222 to generate a reconstructed signal (reconstructed picture, reconstructed block, reconstructed sample array). If there is no residual for the block to be processed, such as a case where the skip mode is applied, the predicted block may be used as the reconstructed block. The adder 250 may be called a reconstructor or a reconstructed block generator. The generated reconstructed signal may be used for intra prediction of a next block to be processed in the current picture and may be used for inter prediction of a next picture through filtering as described below.

The filter 260 may improve subjective/objective image quality by applying filtering to the reconstructed signal. For example, the filter 260 may generate a modified reconstructed picture by applying various filtering methods to the reconstructed picture and store the modified reconstructed picture in the memory 270, specifically, a DPB of the memory 270. The various filtering methods may include, for example, deblocking filtering, a sample adaptive offset, an adaptive loop filter, a bilateral filter, and the like. The filter 260 may generate various information related to the filtering and transmit the generated information to the entropy encoder 240 as described later in the description of each filtering method. The information related to the filtering may be encoded by the entropy encoder 240 and output in the form of a bitstream.

The modified reconstructed picture transmitted to the memory 270 may be used as the reference picture in the inter predictor 221. When the inter prediction is applied through the encoding apparatus, prediction mismatch between the encoding apparatus 200 and the decoding apparatus may be avoided and encoding efficiency may be improved.

The DPB of the memory 270 may store the modified reconstructed picture for use as a reference picture in the inter predictor 221. The memory 270 may store the motion information of the block from which the motion information in the current picture is derived (or encoded) and/or the motion information of the blocks in the picture that have already been reconstructed. The stored motion information may be transmitted to the inter predictor 221 and used as the motion information of the spatial neighboring block or the motion information of the temporal neighboring block. The memory 270 may store reconstructed samples of reconstructed blocks in the current picture and may transfer the reconstructed samples to the intra predictor 222.

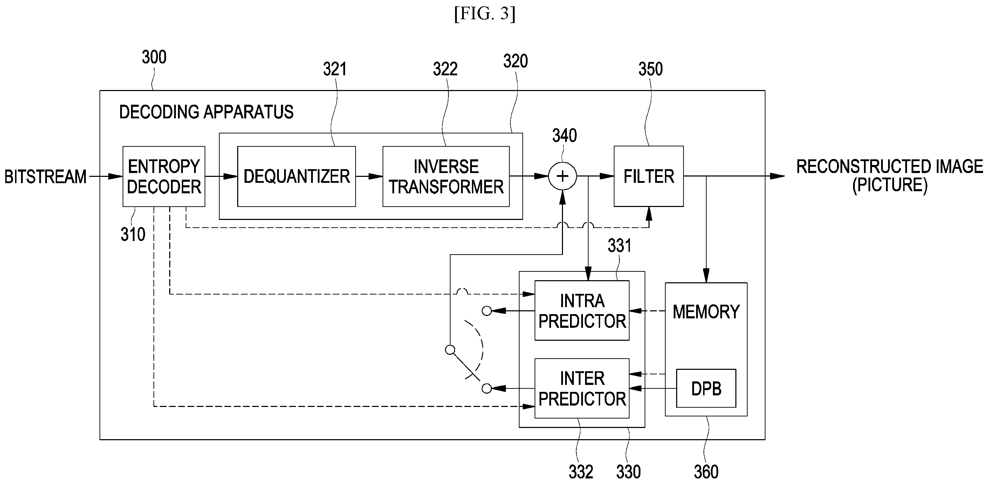

FIG. 3 is a schematic diagram illustrating an image decoding device to which an embodiment according to the present disclosure can be applied.

Referring to Fig. 3, the decoding apparatus 300 may include an entropy decoder 310, a residual processor 320, a predictor 330, an adder 340, a filter 350, a memory 360. The predictor 330 may include an inter predictor 331 and an intra predictor 332. The residual processor 320 may include a dequantizer 321 and an inverse transformer 321. The entropy decoder 310, the residual processor 320, the predictor 330, the adder 340, and the filter 350 may be configured by a hardware component (ex. a decoder chipset or a processor) according to an embodiment. In addition, the memory 360 may include a decoded picture buffer (DPB) or may be configured by a digital storage medium. The hardware component may further include the memory 360 as an internal/external component.

When a bitstream including video/image information is input, the decoding apparatus 300 may reconstruct an image corresponding to a process in which the video/image information is processed in the encoding apparatus of Fig. 2. For example, the decoding apparatus 300 may derive units/blocks based on block partition related information obtained from the bitstream. The decoding apparatus 300 may perform decoding using a processor applied in the encoding apparatus. Thus, the processor of decoding may be a coding unit, for example, and the coding unit may be partitioned according to a quad tree structure, binary tree structure and/or ternary tree structure from the coding tree unit or the largest coding unit. One or more transform units may be derived from the coding unit. The reconstructed image signal decoded and output through the decoding apparatus 300 may be reproduced through a reproducing apparatus.

The decoding apparatus 300 may receive a signal output from the encoding apparatus of Fig. 2 in the form of a bitstream, and the received signal may be decoded through the entropy decoder 310. For example, the entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The decoding apparatus may further decode picture based on the information on the parameter set and/or the general constraint information. Signaled/received information and/or syntax elements described later in this document may be decoded may decode the decoding procedure and obtained from the bitstream. For example, the entropy decoder 310 decodes the information in the bitstream based on a coding method such as exponential Golomb coding, CAVLC, or CABAC, and output syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a decoding target block or information of a symbol/bin decoded in a previous stage, and perform an arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 310 may be provided to the predictor (the inter predictor 332 and the intra predictor 331), and the residual value on which the entropy decoding was performed in the entropy decoder 310, that is, the quantized transform coefficients and related parameter information, may be input to the residual processor 320. The residual processor 320 may derive the residual signal (the residual block, the residual samples, the residual sample array). In addition, information on filtering among information decoded by the entropy decoder 310 may be provided to the filter 350. Meanwhile, a receiver (not shown) for receiving a signal output from the encoding apparatus may be further configured as an internal/external element of the decoding apparatus 300, or the receiver may be a component of the entropy decoder 310. Meanwhile, the decoding apparatus according to this document may be referred to as a video/image/picture decoding apparatus, and the decoding apparatus may be classified into an information decoder (video/image/picture information decoder) and a sample decoder (video/image/picture sample decoder). The information decoder may include the entropy decoder 310, and the sample decoder may include at least one of the dequantizer 321, the inverse transformer 322, the adder 340, the filter 350, the memory 360, the inter predictor 332, and the intra predictor 331.

The dequantizer 321 may dequantize the quantized transform coefficients and output the transform coefficients. The dequantizer 321 may rearrange the quantized transform coefficients in the form of a two-dimensional block form. In this case, the rearrangement may be performed based on the coefficient scanning order performed in the encoding apparatus. The dequantizer 321 may perform dequantization on the quantized transform coefficients by using a quantization parameter (ex. quantization step size information) and obtain transform coefficients.

The inverse transformer 322 inversely transforms the transform coefficients to obtain a residual signal (residual block, residual sample array).

The predictor 330 may generate a prediction signal based on various prediction methods described below. For example, the predictor may apply intra prediction or inter prediction for prediction of one block, and may also apply intra prediction and inter prediction at the same time. This may be called combined inter and intra prediction (CIIP). In addition, the predictor may be based on an intra block copy (IBC) prediction mode or a palette mode for prediction of a block. The IBC prediction mode or palette mode may be used for content image/video coding such as games, such as screen content coding (SCC). The IBC basically performs prediction within the current picture, but may be performed similarly to inter prediction in that it derives a reference block within the current picture. That is, the IBC may use at least one of the inter prediction techniques described in this document. The palette mode may be viewed as an example of intra coding or intra prediction. When palette mode is applied, information about the palette table and palette index may be signaled and included in the video/image information.

The intra predictor 332 may predict the current block by referring to the samples in the current picture. The referenced samples may be located in the neighborhood of the current block or may be located apart according to the prediction mode. In intra prediction, prediction modes may include a plurality of non-directional modes and a plurality of directional modes. The intra predictor 331 may determine the prediction mode applied to the current block by using the prediction mode applied to the neighboring block.

The inter predictor 331 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 332 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 340 may generate a reconstructed signal (reconstructed picture, reconstructed block, reconstructed sample array) by adding the obtained residual signal to the prediction signal (predicted block, predicted sample array) output from the predictor (including the inter predictor 332 and/or the intra predictor 331). If there is no residual for the block to be processed, such as when the skip mode is applied, the predicted block may be used as the reconstructed block. The adder 340 may be called reconstructor or a reconstructed block generator. The generated reconstructed signal may be used for intra prediction of a next block to be processed in the current picture, may be output through filtering as described below, or may be used for inter prediction of a next picture.

Meanwhile, LMCS (luma mapping with chroma scaling) may be applied during the picture decoding process.

The filter 350 may improve subjective/objective image quality by applying filtering to the reconstructed signal. For example, the filter 350 may generate a modified reconstructed picture by applying various filtering methods to the reconstructed picture and store the modified reconstructed picture in the memory 360, specifically, a DPB of the memory 360. The various filtering methods may include, for example, deblocking filtering, a sample adaptive offset, an adaptive loop filter, a bilateral filter, and the like.

The (modified) reconstructed picture stored in the DPB of the memory 360 may be used as a reference picture in the inter predictor 332. The memory 360 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 360 may store reconstructed samples of reconstructed blocks in the current picture and transfer the reconstructed samples to the intra predictor 331.

In the present disclosure, the embodiments described in the filter 260, the inter predictor 221, and the intra predictor 222 of the encoding apparatus 100 may be the same as or respectively applied to correspond to the filter 350, the inter predictor 332, and the intra predictor 331of the decoding apparatus 300. The same may also apply to the unit 332 and the intra predictor 331.

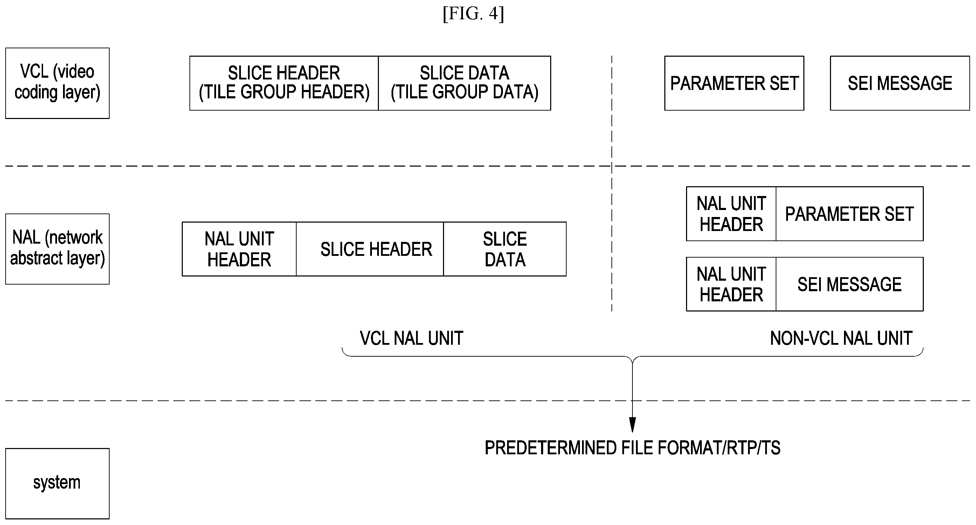

FIG. 4 exemplarily shows a hierarchical structure for coded video/image to which an embodiment according to the present disclosure can be applied.

Referring to Fig. 4, coded image/video is divided into a VCL (video coding layer) that handles the decoding process of the image/video and itself, a subsystem that transmits and stores the coded information, and NAL (network abstraction layer) in charge of function and present between the VCL and the subsystem.

In the VCL, VCL data including compressed image data (slice data) is generated, or a parameter set including a picture parameter set (PSP), a sequence parameter set (SPS), and a video parameter set (VPS) or a supplemental enhancement information (SEI) message additionally required for an image decoding process may be generated.

In the NAL, a NAL unit may be generated by adding header information (NAL unit header) to a raw byte sequence payload (RBSP) generated in a VCL. In this case, the RBSP refers to slice data, parameter set, SEI message, etc., generated in the VCL. The NAL unit header may include NAL unit type information specified according to RBSP data included in the corresponding NAL unit.

As shown in the figure, the NAL unit may be classified into a VCL NAL unit and a Non-VCL NAL unit according to the RBSP generated in the VCL. The VCL NAL unit may mean a NAL unit that includes information on the image (slice data) on the image, and the Non-VCL NAL unit may mean a NAL unit that includes information (parameter set or SEI message) required for decoding the image.

The above-described VCL NAL unit and Non-VCL NAL unit may be transmitted through a network by attaching header information according to the data standard of the subsystem. For example, the NAL unit may be transformed into a data format of a predetermined standard such as an H.266/VVC file format, a real-time transport protocol (RTP), a transport stream (TS), etc., and transmitted through various networks.

As described above, the NAL unit may be specified with the NAL unit type according to the RBSP data structure included in the corresponding NAL unit, and information on the NAL unit type may be stored and signaled in the NAL unit header.

For example, the NAL unit may be classified into a VCL NAL unit type and a Non-VCL NAL unit type according to whether the NAL unit includes information (slice data) about an image. The VCL NAL unit type may be classified according to the nature and type of pictures included in the VCL NAL unit, and the Non-VCL NAL unit type may be classified according to types of parameter sets.

The following is an example of the NAL unit type specified according to the type of parameter set included in the Non-VCL NAL unit type.
APS (Adaptation Parameter Set) NAL unit : Type for NAL unit including APS
DPS (Decoding Parameter Set) NAL unit : Type for NAL unit including DPS
VPS(Video Parameter Set) NAL unit : Type for NAL unit including VPS
SPS(Sequence Parameter Set) NAL unit: Type for NAL unit including SPS
PPS(Picture Parameter Set) NAL unit : Type for NAL unit including PPS
The aforementioned NAL unit types may have syntax information for the NAL unit type, and the syntax information may be stored and signaled in a NAL unit header. For example, the syntax information may be nal_unit_type, and NAL unit types may be specified by a nal_unit_type value.

The slice header (slice header syntax) may include information/parameters that may be commonly applied to the slice. The APS (APS syntax) or the PPS (PPS syntax) may include information/parameters that may be commonly applied to one or more slices or pictures. The SPS (SPS syntax) may include information/parameters that may be commonly applied to one or more sequences. The VPS (VPS syntax) may include information/parameters that may be commonly applied to multiple layers. The DPS (DPS syntax) may include information/parameters that may be commonly applied to the overall video. The DPS may include information/parameters related to concatenation of a coded video sequence (CVS). High level syntax (HLS) in this document may include at least one of the APS syntax, PPS syntax, SPS syntax, VPS syntax, DPS syntax, a picture header syntax and slice header syntax.

In this document, the image/video information encoded from the encoding apparatus and signaled to the decoding apparatus in the form of a bitstream includes not only partitioning related information in a picture, intra/inter prediction information, residual information, in-loop filtering information, etc, but also information included in a slice header, information included in the picture header, information included in the APS, information included in the PPS, information included in an SPS, information included in a VPS and/or information included in a DPS.

The SEI message related to the present invention is described.

Large supplemental enhancement information message, Large SEI message

Table 1 shows an example of large SEI message syntax.

**[Table 1]**

| | |
|---|---|
| lsei_message( ) { | **Descriptor** |
| **lsei_position** | u(2) |
| **lsei_relevance** | u(2) |
| **lsei_reserved** | u(4) |
| **lsei_payload_type_byte** | u(8) |
| **lsei_payload_size_16bits** | u(16) |
| lsei_payload( lseiPayloadType, lseiPayloadSize ) | |
| } | |

Each Large SEI message consists of the variables specifying the type payloadType and size payloadSize of the large SEI message payload. The derived Large SEI message payload size payloadSize is specified in bytes and shall be equal to the number of RBSP bytes in the Large SEI message payload. The NAL unit byte sequence containing the Large SEI message might include one or more emulation prevention bytes (represented by emulation_prevention_three_byte syntax elements). Since the payload size of a Large SEI message is specified in RBSP bytes, the quantity of emulation prevention bytes is not included in the size payloadSize of a Large SEI payload.

The lsei_position indicates if the SEI message corresponds to the PREFIX_SEI_NUT and SUFFIX_SEI_NUT. The lsei_position equal 0 indicates that the SEI message is treated as PREFIX_SEI_NUT. The lsei_position equal 1 indicates that the SEI message is treated as SUFFIX_SEI_NUT. Values 3 and 4 of lsei_position are reserved for future use and shall be ignored.

The lsei_relevance indicates the relevance of the SEI message for the target application. lsei_relevance ranges from 0 to 3, 0 being the least relevant and 3 being the most relevant. The relevance of an SEI message is an arbitrary decision and its use is to be specified by the target application.

The lsei_reserved is revered for future use and shall be ignored.

The lsei_payload_type_byte is a byte of the payload type of a large SEI message. payloadType = lsei_payload_type_byte.

The payload_size_16bits is the payload size in bits of a large SEI message. payloadSize = payload_size_16bits.

General post-processing filtering process using NNPFs (Neural-network post-filter SEI messages)

Input to this process is a bitstream BitstreamToFilter. Output of this process is a list of NNPF output pictures ListNnpfOutputPics.

First, BitstreamToFilter is decoded, and the list CroppedDecodedPictures is set to be the list of the cropped decoded pictures in output order resulted from decoding BitstreamToFilter.

Second, the filtering process for one picture, as specified in subclause 2.5.2.1.2, is repeatedly invoked, in output order, for each cropped decoded picture that is in CroppedDecodedPictures and for which one or more NNPFs are activated.

The order of the pictures in ListNnpfOutputPics is in output order.

Within ListNnpfOutputPics there shall be no more than one picture pertaining to any particular output time instance. When for any particular picture in CroppedDecodedPictures there are multiple NNPFs activated and only one the NNPFs is allowed to be chosen to be applied although any of the NNPFs may be chosen, the above constraint shall apply regardless of which NNPF is chosen to be applied to the particular picture.

Filtering process for one picture using an NNPF

The filtering process specified in this subclause applies to each cropped decoded picture, referred to as the current picture, that is in CroppedDecodedPictures and for which one or more NNPFs are activated.

When applying an NNPF to the current picture, the filtered and/or interpolated pictures are generated by the NNPF by applying the NNPF process specified in the semantics of the NNPFC SEI message, in a patch-wise manner, to the current picture.

When applying an NNPF to the current picture, the order of the pictures generated by the NNPF by applying the NNPF process being stored into the output tensor of the NNPF is in output order.

When the applied NNPF is the last NNPF that is applied to the current picture, the pictures generated by the NNPF and output by the NNPF process are included into ListNnpfOutputPics, in the same order as when the pictures are stored into the output tensor of the NNPF.

Neural-network post-filter characteristics SEI message

Table 2 shows an example of the NNPFC SEI message syntax.

**[Table 2]**

| | |
|---|---|
| nn_post_filter_characteristics( payloadSize ) { | **Descriptor** |
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1 ) { | |
| while( !byte_aligned( ) ) | |
| **nnpfc_reserved_zero_bit_a** | u(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| /* input and output formatting */ | |
| **unpfc_num_input_pics_minus1** | ue(v) |
| if( nnpfc_num_input_pics_minus1 > 0) { | |
| for( i = 0; i <= nnpfc_num_input_pics_minus1; i++ ) | |
| **nnpfc_input_pic_output flag**[ i ] | u(l) |
| **nnpfc_absent_input_pic_zero_flag** | u(1) |
| } | |
| if( chromaUpsamplingFlag ) | |
| **nnpfc_out_sub_c_flag** | u(1) |
| if( colourizationFlag ) | |
| **nnpfc_out_colour_format_idc** | u(2) |
| if( resolutionResamplingFlag ) { | |
| **nnpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_num_minus1** | ue(v) |
| } | |
| if( pictureRateUpsamplingFlag ) | |
| for( i = 0; i < nnpfc_num_input_pics_minus1; i++ ) | |
| **nnpfc_interpolated_pics**[ i ] | ue(v) |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc != 0) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_idc = = 1) { | |
| if( nnpfc_out_order_idc != 1 ) | |
| **mmpfc_out_tensor_luma_bitdepth_minus8** | ue(v) |
| if( nnpfc_out_order_idc != 0) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |
| } | |
| } | |
| **nnpfc_chroma_loc_info_present flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **mnpfc_patch_height minus1** | ue(v) |
| } else { | |
| **unpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type == 4 ) { | |
| if( nnpfc_inp_order_idc != 1) | |
| **nnpfc_luma_padding_val** | ue(v) |
| if( nnpfc_inp_order_idc != 0) { | |
| **nopfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **unpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_metadata_extension_num_bits** | ue(v) |
| if( anpfc_metadata_extension_num_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_reserved_zero_bit_b** | u(1) |
| for( i = 0; more_data_in_payload( ); i++ ) | |
| **nnpfc_payload_byte**[ i ] | b(8) |
| } | |
| } | |

The neural-network post-filter characteristics (NNPFC) SEI message specifies a neural network that may be used as a post-processing filter. The use of specified neural-network post-processing filters (NNPFs) for specific pictures is indicated with neural-network post-filter activation (NNPFA) SEI messages.

Use of this SEI message requires the definition of the following variables:
- Input picture width and height in units of luma samples, denoted herein by CroppedWidth and CroppedHeight, respectively.
- Luma sample array CroppedYPic[ idx ] and chroma sample arrays CroppedCbPic[ idx ] and CroppedCrPic[ idx ], when present, of the input pictures with index idx in the range of 0 to numInputPics - 1, inclusive, that are used as input for the NNPF.
- Bit depth BitDepthY for the luma sample array of the input pictures.
- Bit depth BitDepthC for the chroma sample arrays, if any, of the input pictures.
- A chroma format indicator, denoted herein by ChromaFormatIdc, as described in subclause 7.3.
- When nnpfc_auxiliary_inp_idc is equal to 1, a filtering strength control value array StrengthControlVal[ idx ] that shall contain real numbers in the range of 0 to 1, inclusive, of the input pictures with index idx in the range of 0 to numInputPics - 1, inclusive.

Input picture with index 0 corresponds to the picture for which the NNPF defined by this NNPFC SEI message is activated by an NNPFA SEI message. Input picture with index i in the range of 1 to numInputPics - 1, inclusive, precedes the input picture with index i - 1 in output order.

The variables SubWidthC and SubHeightC are derived from ChromaFormatIdc as specified by Table 2.

More than one NNPFC SEI message can be present for the same picture. When more than one NNPFC SEI message with different values of nnpfc_id is present or activated for the same picture, they can have the same or different values of nnpfc_purpose and nnpfc_mode_idc.

A nnpfc_purpose indicates the purpose of the NNPF as specified in Table 3

**[Table 3]**

| **bitMask** | **Interpretation** |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |

Where ( nnpfc_purpose & bitMask ) not equal to 0 indicates that the NNPF has the purpose associated with the bitMask value in Table 20. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application.

The value of nnpfc_purpose shall be in the range of 0 to 63, inclusive, in bitstreams conforming to this edition of this document. Values of 64 to 65 535, inclusive, for nnpfc_purpose are reserved for future use by ITU-T | ISO/IEC and shall not be present in bitstreams conforming to this edition of this document. Decoders conforming to this edition of this document shall ignore NNPFC SEI messages with nnpfc_purpose in the range of 64 to 65 535, inclusive.

The variables chromaUpsamplingFlag, resolutionResamplingFlag, pictureRateUpsamplingFlag, bitDepthUpsamplingFlag, and colourizationFlag, specifying whether nnpfc_purpose indicates the purpose of the NNPF to include chroma upsampling, resolution resampling, picture rate upsampling, bit depth upsampling, and colourization, respectively, are derived as follows:

**[Table 4]**

| |
|---|
| chromaUpsamplingFlag = ( ( nnpfc_purpose & 0x02 ) > 0 ) ? 1 : 0 |
| resolutionResamplingFlag = ( ( nnpfc_purpose & 0x04 ) > 0 ) ? 1 : 0 |
| pictureRateUpsamplingFlag = ( ( nnpfc_purpose & 0x08 ) > 0 ) ? 1 : 0 |
| bitDepthUpsamplingFlag = ( ( nnpfc_purpose & 0x10 ) > 0 ) ? 1 : 0 |
| colourizationFlag = ( ( nnpfc_purpose & 0x20 ) > 0 ) ? 1 : 0 |

When a reserved value of nnpfc_purpose is taken into use in the future by ITU-T | ISO/IEC, the syntax of this SEI message could be extended with syntax elements whose presence is conditioned by nnpfc_purpose being equal to that value.

When ChromaFormatIdc is equal to 3, chromaUpsamplingFlag shall be equal to 0.

When ChromaFormatIdc or chromaUpsamplingFlag is not equal to 0, colourizationFlag shall be equal to 0.

When pictureRateUpsamplingFlag is equal to 1 and the input picture with index 0 is associated with a frame packing arrangement SEI message with fp_arrangement_type equal to 5, all input pictures are associated with a frame packing arrangement SEI message with fp_arrangement_type equal to 5 and the same value of fp_current_frame_is_frame0_flag.

The nnpfc_id contains an identifying number that may be used to identify an NNPF. The value of nnpfc_id shall be in the range of 0 to 232 - 2, inclusive. Values of nnpfc_id from 256 to 511, inclusive, and from 231 to 232 - 2, inclusive, are reserved for future use by ITU-T | ISO/IEC. Decoders conforming to this edition of this document encountering an NNPFC SEI message with nnpfc_id in the range of 256 to 511, inclusive, or in the range of 231 to 232 - 2, inclusive, shall ignore the SEI message.

When an NNPFC SEI message is the first NNPFC SEI message, in decoding order, that has a particular nnpfc_id value within the current CLVS, the following applies:
- This SEI message specifies a base NNPF.
- This SEI message pertains to the current decoded picture and all subsequent decoded pictures of the current layer, in output order, until the end of the current CLVS.

The nnpfc_base_flag equal to 1 specifies that the SEI message specifies the base NNPF. nnpf_base_flag equal to 0 specifies that the SEI message specifies an update relative to the base NNPF.

The following constraints apply to the value of nnpfc_base_flag:
- When an NNPFC SEI message is the first NNPFC SEI message, in decoding order, that has a particular nnpfc_id value within the current CLVS, the value of nnpfc_base_flag shall be equal to 1.
- When an NNPFC SEI message nnpfcB is not the first NNPFC SEI message, in decoding order, that has a particular nnpfc_id value within the current CLVS and the value of nnpfc_base_flag is equal to 1, the NNPFC SEI message shall be a repetition of the first NNPFC SEI message nnpfcA with the same nnpfc_id value, in decoding order, i.e., the payload content of nnpfcB shall be the same as that of nnpfcA.

When nnpfc_base_flag is equal to 0, the following applies:
- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc_base_flag equal to 0 and that particular nnpfc_id value within the current CLVS, whichever is earlier.

The nnpfc_mode_idc equal to 0 indicates that this SEI message contains an ISO/IEC 15938-17 bitstream that specifies a base NNPF (when nnpfc_base_flag is equal to 1) or is an update relative to the base NNPF with the same nnpfc_id value (when nnpfc_base_flag is equal to 0).

When nnpfc_base_flag is equal to 1, nnpfc_mode_idc equal to 1 specifies that the base NNPF associated with the nnpfc_id value is a neural network identified by the URI indicated by nnpfc_uri with the format identified by the tag URI nnpfc_tag_uri.

When nnpfc_base_flag is equal to 0, nnpfc_mode_idc equal to 1 specifies that an update relative to the base NNPF with the same nnpfc_id value is defined by the URI indicated by nnpfc_uri with the format identified by the tag URI nnpfc_tag_uri.

The value of nnpfc_mode_idc shall be in the range of 0 to 1, inclusive, in bitstreams conforming to this edition of this document. Values of 2 to 255, inclusive, for nnpfc_mode_idc are reserved for future use by ITU-T | ISO/IEC and shall not be present in bitstreams conforming to this edition of this document. Decoders conforming to this edition of this document shall ignore NNPFC SEI messages with nnpfc_mode_idc in the range of 2 to 255, inclusive. Values of nnpfc_mode_idc greater than 255 shall not be present in bitstreams conforming to this edition of this document and are not reserved for future use.

The nnpfc_reserved_zero_bit_a shall be equal to 0 in bitstreams conforming to this edition of this document. Decoders shall ignore NNPFC SEI messages in which nnpfc_reserved_zero_bit_a is not equal to 0.

The nnpfc_tag_uri contains a tag URI with syntax and semantics as specified in IETF RFC 4151 identifying the format and associated information about the neural network used as a base NNPF or an update relative to the base NNPF with the same nnpfc_id value specified by nnpfc_uri.

The nnpfc_tag_uri enables uniquely identifying the format of neural network data specified by nnrpf_uri without needing a central registration authority.

The nnpfc_tag_uri equal to "tag:iso.org,2023:15938-17" indicates that the neural network data identified by nnpfc_uri conforms to ISO/IEC 15938-17.

The nnpfc_uri contains a URI with syntax and semantics as specified in IETF Internet Standard 66 identifying the neural network used as a base NNPF or an update relative to the base NNPF with the same nnpfc_id value.

The nnpfc_property_present_flag equal to 1 specifies that syntax elements related to the filter purpose, input formatting, output formatting, and complexity are present. nnpfc_property_present_flag equal to 0 specifies that no syntax elements related to the filter purpose, input formatting, output formatting, and complexity are present.

When nnpfc_base_flag is equal to 1, nnpfc_property_present_flag shall be equal to 1.

When nnpfc_property_present_flag is equal to 0, the values of all syntax elements that may be present only when nnpfc_property_present_flag is equal to 1 are inferred to be equal to their corresponding syntax elements, respectively, in the NNPFC SEI message that contains the base NNPF for which this SEI message provides an update.

When an NNPFC SEI message nnpfcCurr is not the first NNPFC SEI message, in decoding order, that has a particular nnpfc_id value within the current CLVS, is not a repetition of the first NNPFC SEI message with that particular nnpfc_id (i.e., the value of nnpfc_base_flag is equal to 0), and the value of nnpfc_property_present_flag is equal to 1, the following constraints apply:
- The value of nnpfc_purpose in the NNPFC SEI message shall be the same as the value of nnpfc_purpose in the first NNPFC SEI message, in decoding order, that has that particular nnpfc_id value within the current CLVS.
- The values of syntax elements following nnpfc_property_present_flag and preceding nnpfc_complexity_info_present_flag, in decoding order, in the NNPFC SEI message shall be the same as the values of corresponding syntax elements in the first NNPFC SEI message, in decoding order, that has that particular nnpfc_id value within the current CLVS.
- Either nnpfc_complexity_info_present_flag shall be equal to 0 or both nnpfc_complexity_info_present_flag shall be equal to 1 in the first NNPFC SEI message, in decoding order, that has that particular nnpfc_id value within the current CLVS (denoted as nnpfcBase below) and all the following apply:
- nnpfc_parameter_type_idc in nnpfcCurr shall be equal to nnpfc_parameter_type_idc in nnpfcBase.
- nnpfc_log2_parameter_bit_length_minus3 in nnpfcCurr, when present, shall be less than or equal to nnpfc_log2_parameter_bit_length_minus3 in nnpfcBase.
- If nnpfc_num_parameters_idc in nnpfcBase is equal to 0, nnpfc_num_parameters_idc in nnpfcCurr shall be equal to 0.
- Otherwise (nnpfc_num_parameters_idc in nnpfcBase is greater than 0), nnpfc_num_parameters_idc in nnpfcCurr shall be greater than 0 and less than or equal to nnpfc_num_parameters_idc in nnpfcBase.
- If nnpfc_num_kmac_operations_idc in nnpfcBase is equal to 0, nnpfc_num_kmac_operations_idc in nnpfcCurr shall be equal to 0.
- Otherwise (nnpfc_num_kmac_operations_idc in nnpfcBase is greater than 0), nnpfc_num_kmac_operations_idc in nnpfcCurr shall be greater than 0 and less than or equal to nnpfc_num_kmac_operations_idc in nnpfcBase.
- If nnpfc_total_kilobyte_size in nnpfcBase is equal to 0, nnpfc_total_kilobyte_size in nnpfcCurr shall be equal to 0.
- Otherwise (nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

The nnpfc_num_input_pics_minus1 plus 1 specifies the number of pictures used as input for the NNPF. The value of nnpfc_num_input_pics_minus1 shall be in the range of 0 to 63, inclusive. When pictureRateUpsamplingFlag is equal to 1, the value of nnpfc_num_input_pics_minus1 shall be greater than 0.

The variable numInputPics, specifying the number of pictures used as input for the NNPF, is derived as follows:

**[Table 5]**

| |
|---|
| numInputPics = nnpfc_num_input_pics_minus1 + 1 |

The nnpfc_input_pic_output_flag[ i ] equal to 1 indicates that for the i-th input picture the NNPF generates a corresponding output picture. nnpfc_input_pic_output_flag[ i ] equal to 0 indicates that for the i-th input picture the NNPF does not generate a corresponding output picture. When nnpfc_num_input_pics_minus1 is equal to 0, nnpfc_input_pic_output_flag[ 0 ] is inferred to be equal to 1. When pictureRateUpsamplingFlag is equal to 0 and nnpfc_num_input_pics_minus1 is greater than 0, nnpfc_input_pic_output_flag[ i ] shall be equal to 1 for at least one value of i in the range of 0 to nnpfc_num_input_pics_minus1, inclusive.

The nnpfc_absent_input_pic_zero_flag equal to 1 indicates that the NNPF expects an input picture that is not present in the bitstream to be represented by sample arrays with sample values equal to 0. nnpfc_absent_input_pic_flag equal to 0 indicates that the NNPF expects an input picture that is not present in the bitstream to be represented by the closest input picture in output order within the bitstream.

The nnpfc_out_sub_c_flag specifies the values of the variables outSubWidthC and outSubHeightC when chromaUpsamplingFlag is equal to 1. nnpfc_out_sub_c_flag equal to 1 specifies that outSubWidthC is equal to 1 and outSubHeightC is equal to 1. nnpfc_out_sub_c_flag equal to 0 specifies that outSubWidthC is equal to 2 and outSubHeightC is equal to 1. When ChromaFormatIdc is equal to 2 and nnpfc_out_sub_c_flag is present, the value of nnpfc_out_sub_c_flag shall be equal to 1.

The nnpfc_out_colour_format_idc, when colourizationFlag is equal to 1, specifies the colour format of the NNPF output and consequently the values of the variables outSubWidthC and outSubHeightC. nnpfc_out_colour_format_idc equal to 1 specifies that the colour format of the NNPF output is the 4:2:0 format and outSubWidthC and outSubHeightC are both equal to 2. nnpfc_out_colour_format_idc equal to 2 specifies that the colour format of the NNPF output is the 4:2:2 format and outSubWidthC is equal to 2 and outSubHeightC is equal to 1. nnpfc_out_colour_format_idc equal to 3 specifies that the colour format of the NNPF output is the 4:4:4 format and outSubWidthC and outSubHeightC are both equal to 1. The value of nnpfc_out_colour_format_idc shall not be equal to 0.

When chromaUpsamplingFlag and colourizationFlag are both equal to 0, outSubWidthC and outSubHeightC are inferred to be equal to SubWidthC and SubHeightC, respectively.

The nnpfc_pic_width_num_minus1 plus 1 and nnpfc_pic_width_denom_minus1 plus 1 specify the numerator and denominator, respectively, for the resampling ratio of the NNPF output picture width relative to CroppedWidth. The value of ( nnpfc_pic_width_num_minus1 + 1 ) ÷ ( nnpfc_pic_width_denom_minus1 + 1 ) shall be in the range of 1 ÷ 16 to 16, inclusive. When nnpfc_pic_width_num_minus1 and nnpfc_pic_width_denom_minus1 are not present, the values of nnpfc_pic_width_num_minus1 and nnpfc_pic_width_denom_minus1 are both inferred to be equal to 0.

The variable nnpfcOutputPicWidth, representing the width of the luma sample arrays of the picture(s) resulting from applying the NNPF identified by nnpfc_id to the input picture(s), is derived as follows:

**[Table 6]**

| |
|---|
| ``` nnpfcOutputPicWidth = Ceil(CroppedWidth * (nnpfc_pic_width_num_minus1 + 1) ÷ (nnpfc_pic__width_denom_minus1 + 1)) ``` |

It is a requirement of bitstream conformance that the value of nnpfcOutputPicWidth % outSubWidthC shall be equal to 0.

The nnpfc_pic_height_num_minus1 plus 1 and nnpfc_pic_height_denom_minus1 plus 1 specify the numerator and denominator, respectively, for the resampling ratio of the NNPF output picture height relative to CroppedHeight. The value of ( nnpfc_pic_height_num_minus1 + 1 ) ÷ ( nnpfc_pic_height_denom_minus1 + 1 ) shall be in the range of 1 ÷ 16 to 16, inclusive. When nnpfc_pic_height_num_minus1 and nnpfc_pic_height_denom_minus1 are not present, the values of nnpfc_pic_height_num_minus1 and nnpfc_pic_height_denom_minus1 are both inferred to be equal to 0.

The variable nnpfcOutputPicHeight, representing the height of the luma sample arrays of the picture(s) resulting from applying the NNPF identified by nnpfc_id to the input picture(s), is derived as follows:

**[Table 7]**

| |
|---|
| ``` nnpfcOutputPicHeight = Ceil( CroppedHeight * (nnpfc_pic_height_num_minus1 + 1) ÷ (nnpfc_pic_height_denom_minus1 + 1)) ``` |

It is a requirement of bitstream conformance that the value of nnpfcOutputPicHeight % outSubHeightC shall be equal to 0.

When nnpfc_pic_width_num_minus1, nnpfc_pic_width_denom_minus1, nnpfc_pic_height_num_minus1, and nnpfc_pic_height_denom_minus1 are present, at least one the following shall be true:
- The value of nnpfcOutputPicWidth is not equal to CroppedWidth.
- The value of nnpfcOutputPicHeight is not equal to CroppedHeight.

The nnpfc_interpolated_pics[ i ] specifies the number of interpolated pictures generated by the NNPF between the i-th and the ( i + 1 )-th picture used as input for the NNPF. The value of nnpfc_interpolated_pics[ i ] shall be in the range of 0 to 63, inclusive. The value of nnpfc_interpolated_pics[ i ] shall be greater than 0 for at least one value of i in the range of 0 to nnpfc_num_input_pics_minus1 - 1, inclusive.

The variables NumInpPicsInOutputTensor, specifying the number of pictures that have a corresponding input picture and are present in the output tensor of the NNPF, InpIdx[ idx ] specifying the input picture index of the idx-th picture that is present in the output tensor of the NNPF and has a corresponding input picture, and numOutputPics, specifying the total number of pictures present in the output tensor of the NNPF, are derived as follows:

**[Table 8]**

| |
|---|
| ``` for( i = 0, numOutputPics = 0; i < numInputPics; i++ ) if( nnpfc_input_pic_output_flag[ i ] ) { InpIdx[numOutputPics] = i numOutputPics++ } NumInpPicsInOutputTensor = numOutputPics if( pictureRateUpsamplingFlag ) for( i = 0; i <= numInputPics - 2; i++ ) numOutputPics += nnpfc_interpolated_pics[ i ] ``` |

The nnpfc_component_last_flag equal to 1 indicates that the last dimension in the input tensor inputTensor to the NNPF and the output tensor outputTensor resulting from the NNPF is used for a current channel. nnpfc_component_last_flag equal to 0 indicates that the third dimension in the input tensor inputTensor to the NNPF and the output tensor outputTensor resulting from the NNPF is used for a current channel.

The first dimension in the input tensor and in the output tensor is used for the batch index, which is a practice in some neural network frameworks. While formulae in the semantics of this SEI message use the batch size corresponding to the batch index equal to 0, it is up to the post-processing implementation to determine the batch size used as input to the neural network inference.

For example, when nnpfc_inp_order_idc is equal to 3 and nnpfc_auxiliary_inp_idc is equal to 1, there are 7 channels in the input tensor, including four luma matrices, two chroma matrices, and one auxiliary input matrix. In this case, the process DeriveInputTensors( ) would derive each of these 7 channels of the input tensor one by one, and when a particular channel of these channels is processed, that channel is referred to as the current channel during the process.

The nnpfc_inp_format_idc indicates the method of converting a sample value of the input picture to an input value to the NNPF. When nnpfc_inp_format_idc is equal to 0, the input values to the NNPF are real numbers and the functions InpY( ) and InpC( ) are specified as follows:

**[Table 9]**

| |
|---|
| ``` InpY(x)=x÷((1 << BitDepthY)-1) InpC(x)=x÷((1 << BitDepthc)-1) ``` |

When nnpfc_inp_format_idc is equal to 1, the input values to the NNPF are unsigned integer numbers and the functions InpY( ) and InpC( ) are specified as follows:

**[Table 10]**

| |
|---|
| ``` if( inpTensorBitDepthY >= BitDepthY) InpY( x) = x << (inpTensorBitDepthY - BitDepthY) else InpY(x) = Clip3(0, (1 << inpTensorBi tDepthY) - 1, (x + (1 << (shiftY - 1))) >> shifty) ``` |

**[Table 11]**

| |
|---|
| ``` shiftC = BitDepthC - inpTensorBitDepthC if( inpTensorBitDepthC >= BitDepthC) InpC(x) = x << ( inpTensorBitDepthC - BitDepthC) else InpC(x) = Clip3(0, (1 << inpTe nsorBitDepthC) - 1, (x + (1 << (shiftC - 1))) >> shiftC) ``` |

The variable inpTensorBitDepthY is derived from the syntax element nnpfc_inp_tensor_luma_bitdepth_minus8 as specified below. The variable inpTensorBitDepthC is derived from the syntax element nnpfc_inp_tensor_chroma_bitdepth_minus8 as specified below.

Values of nnpfc_inp_format_idc greater than 1 are reserved for future specification by ITU-T | ISO/IEC and shall not be present in bitstreams conforming to this edition of this document. Decoders conforming to this edition of this document shall ignore NNPFC SEI messages that contain reserved values of nnpfc_inp_format_idc.

The nnpfc_auxiliary_inp_idc greater than 0 indicates that auxiliary input data is present in the input tensor of the NNPF. nnpfc_auxiliary_inp_idc equal to 0 indicates that auxiliary input data is not present in the input tensor. nnpfc_auxiliary_inp_idc equal to 1 specifies that auxiliary input data is derived as specified in Formula 85.

The value of nnpfc_auxiliary_inp_idc shall be in the range of 0 to 1, inclusive, in bitstreams conforming to this edition of this document.

Values of 2 to 255, inclusive, for nnpfc_auxiliary_inp_idc are reserved for future use by ITU-T | ISO/IEC and shall not be present in bitstreams conforming to this edition of this document. Decoders conforming to this edition of this document shall ignore NNPFC SEI messages with nnpfc_auxiliary_inp_idc in the range of 2 to 255, inclusive. Values of nnpfc_auxiliary_inp_idc greater than 255 shall not be present in bitstreams conforming to this edition of this document and are not reserved for future use.

The nnpfc_inp_order_idc indicates the method of ordering the sample arrays of an input picture to form an input tensor to the NNPF.

The value of nnpfc_inp_order_idc shall be in the range of 0 to 3, inclusive, in bitstreams conforming to this edition of this document. Values of 4 to 255, inclusive, for nnpfc_inp_order_idc are reserved for future use by ITU-T | ISO/IEC and shall not be present in bitstreams conforming to this edition of this document. Decoders conforming to this edition of this document shall ignore NNPFC SEI messages with nnpfc_inp_order_idc in the range of 4 to 255, inclusive. Values of nnpfc_inp_order_idc greater than 255 shall not be present in bitstreams conforming to this edition of this document and are not reserved for future use.

When ChromaFormatIdc is not equal to 1, nnpfc_inp_order_idc shall not be equal to 3.

When ChromaFormatIdc is equal to 0, nnpfc_inp_order_idc shall be equal to 0.

When chromaUpsamplingFlag is equal to 1, nnpfc_inp_order_idc shall not be equal to 0.

Table 12 contains an informative description of nnpfc_inp_order_idc values.

**[Table 12]**

| **unprc_inp_ order_idc** | **Description** |
|---|---|
| 0 | If nnpfc_auxiliary_inp_idc is equal to 0, one luma matrix is present in the input tensor for each input picture, and the number of channels is 1. Otherwise, when nnpfc_auxiliary_inp_idc is equal to 1, one luma matrix and one auxiliary input matrix are present, and the number of channels is 2. |
| 1 | If nnpfc_auxiliary_inp_idc is equal to 0, two chroma matrices are present in the input tensor, and the number of channels is 2. Otherwise, when nnpfc_auxiliary_inp_idc is equal to 1, two chroma matrices and one auxiliary input matrix are present, and the number of channels is 3. |
| 2 | If nnpfc_auxiliary_inp_idc is equal to 0, one luma and two chroma matrices are present in the input tensor, and the number of channels is 3. Otherwise, when nnpfc_auxiliary_inp_idc is equal to 1, one luma matrix, two chroma matrices and one auxiliary input matrix are present, and the number of channels is 4. |
| 3 | If nnpfc_auxiliary_inp_idc is equal to 0, four luma matrices and two chroma matrices are present in the input tensor, and the number of channels is 6. Otherwise, when nnpfc_auxiliary_inp_idc is equal to 1, four luma matrices, two chroma matrices, and one auxiliary input matrix are present in the input tensor, and the number of channels is 7. The luma channels are derived in an interleaved manner as illustrated in Figure 12. This nnpfc_inp_order_idc can only be used when the input chroma format is 4:2:0. |
| 4..255 | Reserved |

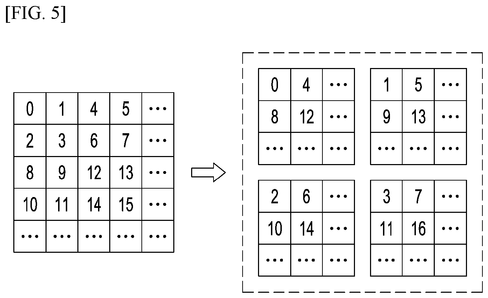

FIG. 5, mentioned in Table 12 above, is a drawing for explaining an interleaved method for deriving a luma channel.

The nnpfc_inp_tensor_luma_bitdepth_minus8 plus 8 specifies the bit depth of luma sample values in the input integer tensor. The value of inpTensorBitDepthY is derived as follows:

**[Table 13]**

| |
|---|
| ``` inpTensorBitDepthY = nnpfc_inp_tensor_luma_bitdepth_minus8 + 8 ``` |

It is a requirement of bitstream conformance that the value of nnpfc_inp_tensor_luma_bitdepth_minus8 shall be in the range of 0 to 24, inclusive.

The nnpfc_inp_tensor_chroma_bitdepth_minus8 plus 8 specifies the bit depth of chroma sample values in the input integer tensor. The value of inpTensorBitDepthC is derived as follows

**[Table 14]**

| |
|---|
| ``` inpTensorBitDepth C = nnpfc_inp_tensor_chroma_bitdepth_minus8 + 8 ``` |

It is a requirement of bitstream conformance that the value of nnpfc_inp_tensor_chroma_bitdepth_minus8 shall be in the range of 0 to 24, inclusive.

When nnpfc_auxiliary_inp_idc is equal to 1, the variable strengthControlScaledVal is derived as follows:

**[Table 15]**

| |
|---|
| ``` for( i = 0; i < numInputPics; i++ ) if( nnpfc_inp_format_idc = = 1 ) if( nnpfc_inp_order_idc = = 0 \| \| nnpfc_inp_order_idc = = 2 \| \| nnpfc_inp_order_idc = = 3 ) strengthControlScaledVal[ i ] = Floor ( StrengthControlVal[ i ] * ( ( 1 << inpTensorBitDepthY ) - 1 ) ) else if( nnpfc_inp_order_idc = = 1 ) strengthControlScaledVal[ i ] = Floor ( StrengthControlVal[ i ] * ( ( 1 << inpTensorBitDepthC ) - 1 ) ) else strengthControlScaledVal[ i ] = StrengthControlVal[ i ] ``` |

A patch is a rectangular array of samples from a component (e.g., a luma or chroma component) of a picture.

The process DeriveInputTensors( ), for deriving the input tensor inputTensor for a given vertical sample coordinate cTop and a horizontal sample coordinate cLeft specifying the top-left sample location for the patch of samples included in the input tensor, is specified as follows:

**[Table 16]**

| |
|---|
| ``` for( i = 0; i < numInputPics; i++ ) { if( nnpfc_inp_order_idc = = 0 ) for( yP = -nnpfc_overlap; yP < inpPatchHeight + nnpfc_overlap; yP++) for( xP = -nnpfc_overlap; xP < inpPatchWidth + nnpfc_overlap; xP++ ) { inpVal = InpY( InpSampleVal( cTop + yP, cLeft + xP, CroppedHeight, CroppedWidth, CroppedYPic[ i ], 0 ) ) yPovlp = yP + nnpfc_overlap xPovlp = xP + nnpfc_overlap if( !nnpfc_component_last_flag ) inputTensor[ 0 ][ i ][ 0 ][ yPovlp ][ xPovlp ] = inpVal else inputTensor[ 0 ][ i ][ yPovlp ][ xPovlp ][ 0 ] = inpVal if( nnpfc_auxiliary_inp_idc = = 1 ) if( !nnpfc_component_last_flag ) inputTensor[ 0 ][ i ][ 1 ][ yPovlp ][ xPovlp ] = strengthControlScaledVal[ i ] else inputTensor[ 0 i ][ yPovlp ][ xPovlp ][ 1 ] = strengthControlScaledVal[ i ] } else if( nnpfc_inp_order_idc = = 1 ) for( yP = -nnpfc_overlap; yP < inpPatchHeight + nnpfc_overlap; yP++) inpCbVal = InpC( InpSampleVal( cTop + yP, cLeft + xP, CroppedHeight / SubHeightC, CroppedWidth / SubWidthC, CroppedCbPic[ i ], 1 ) ) inpCrVal = InpC( InpSampleVal( cTop + yP, cLeft + xP, CroppedHeight / SubHeightC, CroppedWidth / SubWidthC, CroppedCrPic[ i ], 2 ) ) yPovlp = yP + nnpfc_overlap xPovlp = xP + nnpfc_overlap if( !nnpfc_component_last_flag ) { inputTensor[ 0 ][ i ][ 0 ][ yPovlp ][ xPovlp ] = inpCbVal inputTensor[ 0 ][ i ][ 1 ][ yPovlp ][ xPovlp ] = inpCrVal } else { ``` |
| ``` inputTensor[ 0 ][ i ][ yPovlp ][ xPovlp ][ 0 ] = inpCbVal inputTensor[ 0 ][ i ][ yPovlp ][ xPovlp ][ 1 ] = inpCrVal } if( nnpfc_auxiliary_inp_idc = = 1 ) if( !nnpfc_component_last_flag ) inputTensor[ 0 ][ i ] [ 2 ][ yPovlp ][ xPovlp ] = strength ControlScaledVal[ i ] else inputTensor[ 0 ][ i ][ yPovlp ][ xPovlp ][ 2 ] = strength ControlScaledVal[ i ] } else if( nnpfc_inp_order_idc == 2 ) for( yP = -nnpfc_overlap; yP < inpPatchHeight + nnpfc_overlap; yP++) for( xP = -nnpfc_overlap; xP < inpPatchWidth + nnpfc_overlap; xP++ ) { yY = cTop + yP xY = cLeft + xP yC = yY / SubHeightC xC = xY / SubWidthC inpYVal = InpY( InpSampleVal( yY, xY, CroppedHeight, CroppedWidth, CroppedYPic[ i ], 0 ) ) inpCbVal = InpC( InpSampleVal ( yC, xC, CroppedHeight / SubHeightC, CroppedWidth / SubWidthC, CroppedCbPic[ i ], 1 ) ) inpCrVal = InpC( InpSampleVal ( yC, xC, CroppedHeight / SubHeightC, CroppedWidth / SubWidthC, CroppedCrPic[ i ], 2 ) ) yPovlp = yP + nnpfc_overlap xPovlp = xP + nnpfc_overlap if( !nnpfc_component_last_flag ) { inputTensor[ 0 ][ i ][ 0 ][ yPovlp ][ xPovlp ] = inpYVal inputTensor[ 0 ][ i ][ 1 ] [ yPovlp ][ xPovlp ] = inpCbVal inputTensor[ 0 ][ i ] [ 2 ][ yPovlp ][ xPovlp ] = inpCrVal } else { ``` |
| ``` inputTensor[ 0 ][ i ][ yPovlp ][ xPovlp ][ 0 ] = inpYVal inputTensor[ 0 ] [ i ][ yPovlp ][ xPovlp ][ 1 ] = inpCbVal inputTensor[ 0 ][ i ] [ yPovlp ][ xPovlp ][ 2 ] = inpCrVal } if( nnpfc_auxiliary_inp_idc = = 1 ) if( !nnpfc_component_last_flag ) inputTensor[ 0 ][ i ][ 3 ] [ yPovlp ][ xPovlp ] = strength ControlScaledVal[ i ] else inputTensor[ 0 i ] [ yPovlp ] [ xPovlp ][ 3 ] = strength ControlScaledVal[ i ] } else if( nnpfc_inp_order_idc == 3 ) for( yP = -nnpfc_overlap; yP < inpPatchHeight + nnpfc_overlap; yP++) for( xP = -nnpfc_overlap; xP < inpPatchWidth + nnpfc_overlap; xP++ ) { yTL = cTop + yP * 2 xTL = cLeft + xP * 2 yBR = yTL + 1 xBR = xTL + 1 yC = cTop / 2 + yP xC = cLeft / 2 + xP inpTLVal = InpY( InpSampleVal( yTL, xTL, CroppedHeight, CroppedWidth, CroppedYPic[ i ], 0 ) ) inpTRVal = InpY( InpSampleVal( yTL, xBR, CroppedHeight, CroppedWidth, CroppedYPic[ i ], 0 ) ) inpBLVal = InpY( InpSampleVal( yBR, xTL, CroppedHeight, CroppedWidth, CroppedYPic[ i ], 0 ) ) inpBRVal = InpY( InpSampleVal( yBR, xBR, CroppedHeight, CroppedWidth, CroppedYPic[ i ], 0 ) ) inpCbVal = InpC( InpSampleVal( yC, xC, CroppedHeight / 2, CroppedWidth / 2, CroppedCbPic[ i ], 1 ) ) ``` |
| ``` inpCrVal = InpC( InpSampleVal( yC, xC, CroppedHeight / 2, CroppedWidth / 2, CroppedCrPic[ i ], 2 ) ) yPovlp = yP + nnpfc_overlap xPovlp = xP + nnpfc_overlap if( !nnpfc_component_last_flag ) { inputTensor [ 0 ][ i ][ 0 ][ yPovlp ][ xPovlp ] = inpTLVal inputTensor[ 0 ] [ i ][ 1 ][ yPovlp ][ xPovlp ] = inpTRVal inputTensor[ 0 ] [ i ][ 2 ][ yPovlp ][ xPovlp ] = inpBLVal inputTensor[ 0 ][ i ][ 3 ][ yPovlp ][ xPovlp ] = inpBRVal inputTensor[ 0 ][ i ][ 4 ][ yPovlp ][ xPovlp ] = inpCbVal inputTensor[ 0 i ][ 5 ][ yPovlp ][ xPovlp ] = inpCrVal } else { inputTensor[ 0 ][ i ][ yPovlp ] [ xPovlp ][ 0 ] = inpTLVal inputTensor[ 0 ] [ i ][ yPovlp ][ xPovlp ][ 1 ] = inpTRVal inputTensor[ 0 ] [ i ][ yPovlp ][ xPovlp ][ 2 ] = inpBLVal inputTensor[ 0 ][ i ][ yPovlp ][ xPovlp ][ 3 ] = inpBRVal inputTensor[ 0 ][ i ] [ yPovlp ][ xPovlp ][ 4 ] = inpCbVal inputTensor[ 0 ][ i ][ yPovlp ] [ xPovlp ][ 5 ] = inpCrVal } if( nnpfc_auxiliary_inp_idc = = 1 ) if( !nnpfc_component_last_flag ) inputTensor[ 0 ][ i ][ 6 ][ yPovlp ][ xPovlp ] = strengthCont rolScaledVal[ i ] else inputTensor[ 0 ][ i ] [ yPovlp ][ xPovlp ][ 6 ] = strengthCont rolScaledVal[ i ] } } ``` |

The nnpfc_out_format_idc equal to 0 indicates that the sample values output by the NNPF are real numbers where the value range of 0 to 1, inclusive, maps linearly to the unsigned integer value range of 0 to ( 1 << bitDepth ) - 1, inclusive, for any desired bit depth bitDepth for subsequent post-processing or displaying.

The nnpfc_out_format_idc equal to 1 indicates that the luma sample values output by the NNPF are unsigned integer numbers in the range of 0 to ( 1 << outTensorBitDepthY ) - 1, inclusive, and the chroma sample values output by the NNPF are unsigned integer numbers in the range of 0 to ( 1 << outTensorBitDepthC ) - 1, inclusive.

Values of nnpfc_out_format_idc greater than 1 are reserved for future specification by ITU-T | ISO/IEC and shall not be present in bitstreams conforming to this edition of this document. Decoders conforming to this edition of this document shall ignore NNPFC SEI messages that contain reserved values of nnpfc_out_format_idc.

The nnpfc_out_order_idc indicates the output order of samples resulting from the NNPF.

The value of nnpfc_out_order_idc shall be in the range of 0 to 3, inclusive, in bitstreams conforming to this edition of this document. Values of 4 to 255, inclusive, for nnpfc_out_order_idc are reserved for future use by ITU-T | ISO/IEC and shall not be present in bitstreams conforming to this edition of this document. Decoders conforming to this edition of this document shall ignore NNPFC SEI messages with nnpfc_out_order_idc in the range of 4 to 255, inclusive. Values of nnpfc_out_order_idc greater than 255 shall not be present in bitstreams conforming to this edition of this document and are not reserved for future use.

When chromaUpsamplingFlag is equal to 1, nnpfc_out_order_idc shall not be equal to 0 or 3.

When colourizationFlag is equal to 1, nnpfc_out_order_idc shall not be equal to 0.

Table 17 contains an informative description of nnpfc_out_order_idc values.

**[Table 17]**

| **nnpfc_out_ order_idc** | **Description** |
|---|---|
| 0 | Only the luma matrix is present in the output tensor, thus the number of channels is 1. |
| 1 | Only the chroma matrices are present in the output tensor, thus the number of channels is 2. |
| 2 | The luma and chroma matrices are present in the output tensor, thus the number of channels is 3. |
| 3 | Four luma matrices and two chroma matrices are present in the output tensor, thus the number of channels is 6. This nnpfc_out_order_idc can only be used when the output chroma format is 4:2:0. |
| 4..255 | Reserved |

The nnpfc_out_tensor_luma_bitdepth_minus8 plus 8 specifies the bit depth of luma sample values in the output integer tensor. The value of nnpfc_out_tensor_luma_bitdepth_minus8 shall be in the range of 0 to 24, inclusive. The value of outTensorBitDepthY is derived as follows:

**[Table 18]**

| |
|---|
| ``` outTensorBitDepthY = nnpfc_out_tensor_luma_bitdepth_minus8 + 8 ``` |

The nnpfc_out_tensor_chroma_bitdepth_minus8 plus 8 specifies the bit depth of chroma sample values in the output integer tensor. The value of nnpfc_out_tensor_chroma_bitdepth_minus8 shall be in the range of 0 to 24, inclusive. The value of outTensorBitDepthC is derived as follows:

**[Table 19]**

| |
|---|
| ``` outTensorBitDepthC = nnpfc_out_tensor_chroma_bitdepth_minus8 + 8 ``` |

When bitDepthUpsamplingFlag is equal to 1, the value of nnpfc_out_format_idc shall be equal to 1 and at least one of the following conditions shall be true:
- nnpfc_out_tensor_luma_bitdepth_minus8 is present and outTensorBitDepthY is greater than BitDepthY.
- nnpfc_out_tensor_chroma_bitdepth_minus8 is present and outTensorBitDepthC is greater than BitDepthC.

When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepthY is greater than inpTensorBitDepthY, outTensorBitDepthC shall not be less than inpTensorBitDepthC.

When nnpfc_inp_tensor_luma_bitdepth_minus8, nnpfc_inp_tensor_chroma_bitdepth_minus8, nnpfc_out_tensor_luma_bitdepth_minus8, and nnpfc_out_tensor_chroma_bitdepth_minus8 are present and outTensorBitDepthC is greater than inpTensorBitDepthC, outTensorBitDepthY shall not be less than inpTensorBitDepthY.

The process StoreOutputTensors( ), for deriving sample values in the filtered output sample arrays FilteredYPic, FilteredCbPic, and FilteredCrPic from the output tensor outputTensor for a given vertical sample coordinate cTop and a horizontal sample coordinate cLeft specifying the top-left sample location for the patch of samples included in the input tensor, is specified as follows:

**[Table 20]**

| |
|---|
| ``` for( i = 0; i < numOutputPics; i++ ) { if( nnpfc_out_order_idc = = 0 ) for( yP = 0; yP < outPatchHeight; yP++) for( xP = 0; xP < outPatchWidth; xP++ ) { yY = cTop * outPatchHeight / inpPatchHeight + yP xY = cLeft * outPatchWidth / inpPatchWidth + xP if ( yY < nnpfcOutputPicHeight && xY < nnpfcOutputPicWidth ) if( !nnpfc_component_last_flag ) FilteredYPic[ i ][ xY ] [yY ] = outputTensor[ 0 ][ i ][ 0 ][ yP ][ xP ] else FilteredYPic[ i ][ xY ] [ yY ] = outputTensor[ 0 ][ i ][ yP ][ xP ][ 0 ] else if( nnpfc_out_order_idc = = 1 ) for( yP = 0; yP < outPatchCHeight; yP++) for( xP = 0; xP < outPatchCWidth; xP++ ) { xSrc = cLeft * horCScaling + xP ySrc = cTop * verCScaling + yP if ( ySrc < nnpfcOutputPicHeight / outSubHeightC && xSrc < nnpfcOutputPicWidth / outSubWidthC ) FilteredCbPic[ i ][ xSrc ] [ ySrc ] = outputTensor[ 0 ][ i ] [ 0 ][ yP ][ xP ] FilteredCrPic[ i ] [ xSrc ][ ySrc ] = outputTensor[ 0 ][ i ] [ 1 ][yP][xP] } else { FilteredCbPic[ i ][ xSrc ][ ySrc ] = outputTensor[ 0 ][ i ][ yP ] [ xP ][ 0 ] FilteredCrPic[ i ][ xSrc ] [ ySrc ] = outputTensor[ 0 ][ i ][ yP ] [ xP ][ 1 ] } } else if( nnpfc_out_order_idc = = 2 ) for( yP = 0; yP < outPatchHeight; yP++) for( xP = 0; xP < outPatchWidth; xP++ ) { ``` |
| ``` yY = cTop * outPatchHeight / inpPatchHeight + yP xY = cLeft * outPatchWidth / inpPatchWidth + xP yC = yY / outSubHeightC xC = xY / outSubWidthC yPc = ( yP / outSubHeightC ) * outSubHeightC xPc = ( xP / outSubWidthC ) * outSubWidthC if ( yY < nnpfcOutputPicHeight && xY < nnpfcOutputPicWidth ) if( !nnpfc_component_last_flag ) { FilteredYPic[ i ][ xY ][ yY ] = outputTensor [ 0 ][ i ][ 0 ][ yP ][ xP ] FilteredCbPic[ i ][ xC ] [ yC ] = outputTensor[ 0 ][ i ][ 1 ] [ yPc ][ xPc ] FilteredCrPic[ i ][ xC ] [ yC ] = outputTensor[ 0 ][ i ][ 2 ] [ yPc ][ xPc ] } else { FilteredYPic[ i ][ xY ] [ yY ] = outputTensor[ 0 ][ i ][ yP ][ xP ][ 0 ] FilteredCbPic[ i ] [ xC ][ yC ] = outputTensor[ 0 ][ i ][ yPc ] [ xPc ][ 1 ] FilteredCrPic[ i ][ xC ] [ yC ] = outputTensor[ 0 ][ i ][ yPc ] [ xPc ][ 2 ] } ``` |
| ``` else if( nnpfc_out_order_idc = = 3 ) for( yP = 0; yP < outPatchHeight; yP++ ) for( xP = 0; xP < outPatchWidth; xP++ ) { ySrc = cTop / 2 * outPatchHeight / inpPatchHeight + yP xSrc = cLeft / 2 * outPatchWidth / inpPatchWidth + xP if ( ySrc < nnpfcOutputPicHeight / 2 && xSrc < nnpfcoutputPicWidth / 2 ) if( !nnpfc_component_last_flag ) { FilteredYPic[ i ][ xSrc * 2 ][ ySrc * 2 ] = outputTensor[ 0 ] [ i ][ 0 ][ yP ][ xP ] FilteredYPic[ i ][ xSrc * 2 + 1 ][ ySrc * 2 ] = outputTensor [ 0 ][ i ][ 0 ][ yP ][ xP ] FilteredYPic[ i ][ xSrc * 2 ] [ ySrc * 2 + 1 ] = outputTensor [ 0 ][ i ][ 2 ][ yP ][ xP ] FilteredYPic[ i ][ xSrc * 2 + 1] [ ySrc * 2 + 1 ] = outputTensor [ 0 ][ i ][ 3 ][ yP ][ xP ] FilteredCbPic[ i ][ xSrc ][ ySrc ] = outputTensor [ 0 ][ i ][ 4 ][ yP ][ xP ] FilteredCrPic[ i ][ xSrc ][ ySrc ] = outputTensor [ 0 ][ i ][ 5 ][ yP ][ xP ] } else { FilteredYPic[ i ][ xSrc * 2 ][ ySrc * 2 ] = outputTensor [ 0 ][ i ][ yP ][ xP ][ 0 ] FilteredYPic[ i ][ xSrc * 2 + 1 ][ ySrc * 2 ] = outputTensor [ 0 ][ i ][ yP ][ xP ][ 1 ] FilteredYPic[ i ][ xSrc * 2 ] [ ySrc * 2 + 1 ] = outputTensor [ 0 ][ i ][ yP ][ xP ][ 2 ] FilteredYPic[ i ][ xSrc * 2 + 1] [ ySrc * 2 + 1 ] = outputTensor [ 0 ][ i ][ yP ][ xP ][ 3 ] FilteredCbPic[ i ][ xSrc ][ ySrc ] = outputTensor [ 0 ][ i ][ yP ][ xP ][ 4 ] FilteredCrPic[ i ][ xSrc ][ ySrc ] = outputTensor [ 0 ][ i ][ yP ][ xP ][ 5 ] } ``` |

The nnpfc_separate_colour_description_present_flag equal to 1 indicates that a distinct combination of colour primaries, transfer characteristics, matrix coefficients, and scaling and offset values applied in association with the matrix coefficients for the picture resulting from the NNPF is specified in the SEI message syntax structure. nnpfc_separate_colour_description_present_flag equal to 0 indicates that the combination of colour primaries, transfer characteristics, matrix coefficients, and scaling and offset values applied in association with the matrix coefficients for the picture resulting from the NNPF is the same as indicated in VUI parameters for the CLVS.

The nnpfc_colour_primaries has the same semantics as specified in subclause 7.3 for the vui_colour_primaries syntax element, except as follows:
- nnpfc_colour_primaries specifies the colour primaries of the picture resulting from applying the NNPF specified in the SEI message, rather than the colour primaries used for the CLVS.
- When nnpfc_colour_primaries is not present in the NNPFC SEI message, the value of nnpfc_colour_primaries is inferred to be equal to vui_colour_primaries.

The nnpfc_transfer_characteristics has the same semantics as specified in subclause 7.3 for the vui_transfer_characteristics syntax element, except as follows:
- nnpfc_transfer_characteristics specifies the transfer characteristics of the picture resulting from applying the NNPF specified in the SEI message, rather than the transfer characteristics used for the CLVS.
- When nnpfc_transfer_characteristics is not present in the NNPFC SEI message, the value of nnpfc_transfer_characteristics is inferred to be equal to vui_transfer_characteristics.

The nnpfc_matrix_coeffs describes the equations used in deriving luma and chroma signals from the green, blue, and red, or Y, Z, and X primaries. Its semantics apply to the pictures resulting from applying the NNPF specified in this SEI message and are as specified for MatrixCoefficients in Rec. ITU-T H.273 | ISO/IEC 23091-2 with BitDepthY and BitDepthC being equal to outTensorBitDepthY and outTensorBitDepthC, respectively.

When nnpfc_matrix_coeffs is not present in the NNPFC SEI message, the value of nnpfc_matrix_coeffs is inferred to be equal to vui_matrix_coeffs.

The nnpfc_matrix_coeffs shall not be equal to 0 unless both of the following conditions are true:
- nnpfc_out_tensor_chroma_bitdepth_minus8 is equal to nnpfc_out_tensor_luma_bitdepth_minus8.
- nnpfc_out_order_idc is equal to 2, outSubHeightC is equal to 1, and outSubWidthC is equal to 1.

The nnpfc_matrix_coeffs shall not be equal to 8 unless one of the following conditions is true:
- nnpfc_out_tensor_chroma_bitdepth_minus8 is equal to nnpfc_out_tensor_luma_bitdepth_minus8.
- nnpfc_out_tensor_chroma_bitdepth_minus8 is equal to nnpfc_out_tensor_luma_bitdepth_minus8 + 1, nnpfc_out_order_idc is equal to 2, outSubHeightC is equal to 1, and outSubWidthC is equal to 1.

The nnpfc_full_range_flag indicates the scaling and offset values applied in association with the matrix coefficients as specified by nnpfc_matrix_coeffs. Its semantics are as specified for the VideoFullRangeFlag parameter in Rec. ITU-T H.273 | ISO/IEC 23091-2. When not present, the value of nnpfc_full_range_flag is inferred to be equal to 0.

The nnpfc_chroma_loc_info_present_flag equal to 1 indicates the presence of the nnpfc_chroma_sample_loc_type_frame syntax element in the NNPFC SEI message. nnpfc_chroma_loc_info_present_flag equal to 0 indicates the absence of the nnpfc_chroma_sample_loc_type_frame syntax element in the NNPFC SEI message. When colourizationFlag is equal to 0 or nnpfc_out_colour_format_idc is not equal to 1, the value of nnpfc_chroma_loc_info_present_flag shall be equal to 0.

The nnpfc_chroma_sample_loc_type_frame, when not equal to 6 and nnpfc_out_colour_format_idc is equal to 1, specifies the location of chroma samples of the output pictures, as shown in Figure 1. nnpfc_chroma_sample_loc_type_frame equal to 6 and nnpfc_out_colour_format_idc equal to 1 indicates that the location of the chroma samples is unknown or unspecified or specified by other means not specified in this document. The value of nnpfc_chroma_sample_loc_type_frame shall be in the range of 0 to 6, inclusive.

The nnpfc_overlap indicates the overlapping horizontal and vertical sample counts of adjacent input tensors of the NNPF. The value of nnpfc_overlap shall be in the range of 0 to 16 383, inclusive.

The nnpfc_constant_patch_size_flag equal to 1 indicates that the NNPF accepts exactly the patch size indicated by nnpfc_patch_width_minus1 and nnpfc_patch_height_minus1 as input. nnpfc_constant_patch_size_flag equal to 0 indicates that the NNPF accepts as input any patch size with width inpPatchWidth and height inpPatchHeight such that the width of an extended patch (i.e., a patch plus the overlapping area), which is equal to inpPatchWidth + 2 * nnpfc_overlap, is a positive integer multiple of nnpfc_extended_patch_width_cd_delta_minus1 + 1 + 2 * nnpfc_overlap, and the height of the extended patch, which is equal to inpPatchHeight + 2 * nnpfc_overlap, is a positive integer multiple of nnpfc_extended_patch_height_cd_delta_minus1 + 1 + 2 * nnpfc_overlap.

The nnpfc_patch_width_minus1 plus 1, when nnpfc_constant_patch_size_flag equal to 1, indicates the horizontal sample counts of the patch size required for the input to the NNPF. The value of nnpfc_patch_width_minus1 shall be in the range of 0 to Min( 32 766, CroppedWidth - 1 ), inclusive.

The nnpfc_patch_height_minus1 plus 1, when nnpfc_constant_patch_size_flag equal to 1, indicates the vertical sample counts of the patch size required for the input to the NNPF. The value of nnpfc_patch_height_minus1 shall be in the range of 0 to Min( 32 766, CroppedHeight - 1 ), inclusive.

The nnpfc_extended_patch_width_cd_delta_minus1 plus 1 plus 2 * nnpfc_overlap, when nnpfc_constant_patch_size_flag equal to 0, indicates a common divisor of all allowed values of the width of an extended patch required for the input to the NNPF. The value of nnpfc_extended_patch_width_cd_delta_minus1 shall be in the range of 0 to Min( 32 766, CroppedWidth - 1 ), inclusive.

The nnpfc_extended_patch_height_cd_delta_minus1 plus 1 plus 2 * nnpfc_overlap, when nnpfc_constant_patch_size_flag equal to 0, indicates a common divisor of all allowed values of the height of an extended patch required for the input to the NNPF. The value of nnpfc_extended_patch_height_cd_delta_minus1 shall be in the range of 0 to Min( 32 766, CroppedHeight - 1 ), inclusive.

Let the variables inpPatchWidth and inpPatchHeight be the patch size width and the patch size height, respectively.

If nnpfc_constant_patch_size_flag is equal to 0, the following applies:
- The values of inpPatchWidth and inpPatchHeight are either provided by external means not specified in this document or set by the post-processor itself.
- The value of inpPatchWidth + 2 * nnpfc_overlap shall be a positive integer multiple ofnnpfc_extended_patch_width_cd_delta_minus1 + 1 + 2 * nnpfc_overlap and inpPatchWidth shall be less than or equal to CroppedWidth. The value of inpPatchHeight + 2 * nnpfc_overlap shall be a positive integer multiple ofnnpfc_extended_patch_height_cd_delta_minus1 + 1 + 2 * nnpfc_overlap and inpPatchHeight shall be less than or equal to CroppedHeight.

Otherwise (nnpfc_constant_patch_size_flag is equal to 1), the value of inpPatchWidth is set equal to nnpfc_patch_width_minus1 + 1 and the value of inpPatchHeight is set equal to nnpfc_patch_height_minus1 + 1.

The variables outPatchWidth, outPatchHeight, horCScaling, verCScaling, outPatchCWidth, and outPatchCHeight are derived as follows:

**[Table 21]**

| |
|---|
| ``` outPatchWidth = ( nnpfcOutputPicWidth * inpPatchWidth ) / CroppedWidth outPatchHeight = ( nnpfcOutputPicHeight * inpPatchHeight ) / CroppedHeight horCScaling = SubWidthC / outSubWidthC verCScaling = SubHeightC / outSubHeightC outPatchCWidth = outPatchWidth * horCScaling outPatchCHeight = outPatchHeight * verCScaling ``` |

It is a requirement of bitstream conformance that outPatchWidth * CroppedWidth shall be equal to nnpfcOutputPicWidth * inpPatchWidth and outPatchHeight * CroppedHeight shall be equal to nnpfcOutputPicHeight * inpPatchHeight.

nnpfc_padding_type indicates the process of padding when referencing sample locations outside the boundaries of the input picture as described in Table 22.

**[Table 22]**

| **nnpfc_padding type** | **Description** |
|---|---|
| 0 | Zero padding |
| 1 | Replication padding |
| 2 | Reflection padding |
| 3 | Wrap-around padding |
| 4 | Fixed padding |
| 5..15 | reserved |

The value of nnpfc_padding_type shall be in the range of 0 to 4, inclusive, in bitstreams conforming to this edition of this document. Values of 5 to 15, inclusive, for nnpfc_padding_type are reserved for future use by ITU-T | ISO/IEC and shall not be present in bitstreams conforming to this edition of this document. Decoders conforming to this edition of this document shall ignore NNPFC SEI messages with nnpfc_padding_type in the range of 5 to 15, inclusive. Values of nnpfc_padding_type greater than 15 shall not be present in bitstreams conforming to this edition of this document and are not reserved for future use.

The nnpfc_luma_padding_val indicates the luma value to be used for padding when nnpfc_padding_type is equal to 4. The value of nnpfc_luma_padding_val shall be in the range of 0 to ( 1 << BitDepthY ) - 1, inclusive.

The nnpfc_cb_padding_val indicates the Cb value to be used for padding when nnpfc_padding_type is equal to 4. The value of nnpfc_cb_padding_val shall be in the range of 0 to ( 1 << BitDepthC ) - 1, inclusive.

The nnpfc_cr_padding_val indicates the Cr value to be used for padding when nnpfc_padding_type is equal to 4. The value of nnpfc_cr_padding_val shall be in the range of 0 to ( 1 << BitDepthC ) - 1, inclusive.

The function InpSampleVal( y, x, picHeight, picWidth, croppedPic, cIdx ) with inputs being a vertical sample location y, a horizontal sample location x, a picture height picHeight, a picture width picWidth, sample array croppedPic, and component index cIdx (equal to 0 for luma, 1 for Cb, and 2 for Cr) returns the value of sampleVal derived as follows:

**[Table 23]**

| |
|---|
| ``` if( nnpfc_padding_type = = 0 ) if( y < 0 ∥ x < 0 ∥ y >= picHeight ∥ x >= picWidth ) sampleVal = 0 else sampleVal = croppedPic[ x ][ y ] else if( nnpfc_padding_type = = 1 ) sampleVal = croppedPic[ Clip3( 0, pic Width - 1, x ) ][ Clip3( 0, picHeight - 1, y ) ] else if( nnpfc_padding_type = = 2 ) sampleVal = croppedPic[ Reflect( picWidth - 1, x ) ][ Reflect( picHeight - 1, y ) ] else if( nnpfc_padding_type = = 3 ) if( y >= 0 && y < picHeight ) sampleVal = croppedPic[ Wrap( picWidth - 1, x ) ][ y ] else if( nnpfc_padding_type = = 4 ) if( y < 0 ∥ x < 0 ∥ y >= picHeight ∥ x >= picWidth ) sampleVal = ( cIdx = = 0 ? nnpfc_luma_padding_val : (cIdx = = 1 ? nnpfc_cb_padding_val : nnpfc_cr_padding_val ) ) else sampleVal = croppedPic[ x ][ y ] ``` |

For the inputs to the function InpSampleVal( ), the vertical location is listed before the horizontal location for compatibility with input tensor conventions of some inference engines.

An NNPF PostProcessingFilter( ) is the target NNPF as derived in the semantics of the NNPFA SEI message. The following example process may be used, with the NNPF PostProcessingFilter( ), to generate, in a patch-wise manner, the filtered and/or interpolated picture(s), which contain Y, Cb, and Cr sample arrays FilteredYPic, FilteredCbPic, and FilteredCrPic, respectively, as indicated by nnpfc_out_order_idc:

**[Table 24]**

| |
|---|
| ``` if( nnpfc_inp_order_idc = = 0 ∥ nnpfc_inp_order_idc = = 2 ) for( cTop = 0; cTop < CroppedHeight; cTop += inpPatchHeight ) for( cLeft = 0; cLeft < CroppedWidth; cLeft += inpPatchWidth ) { DeriveInputTensors( ) outputTensor = PostProcessingFilter( inputTensor ) StoreOutputTensors( ) } else if( nnpfc_inp_order_idc = = 1 ) for( cTop = 0; cTop < CroppedHeight / SubHeightC; cTop += inpPatchHeight ) for( cLeft = 0; cLeft < CroppedWidth / SubWidthC; cLeft += inpPatchWidth ) { DeriveInputTensors( ) outputTensor = PostProcessingFilter( inputTensor ) StoreOutputTensors( ) } else if( nnpfc_inp_order_idc = = 3 ) for( cTop = 0; cTop < CroppedHeight; cTop += inpPatchHeight * 2 ) for( cLeft = 0; cLeft < CroppedWidth; cLeft += inpPatchWidth * 2 ) { DeriveInputTensors( ) outputTensor = PostProcessingFilter( inputTensor ) StoreOutputTensors( ) } ``` |

An NNPF-generated picture with index i contains sample arrays FilteredYPic[ i ], FilteredCbPic[ i ], and FilteredCrPic[ i ], when present, that are derived by Formula 99. An NNPF-generated picture does not include the overlap regions.

The NNPF process consists of the process defined by Formula 99 followed by outputting NNPF-generated pictures in their increasing index order, where all NNPF-generated pictures that were interpolated by the NNPF are output and those NNPF-generated pictures that correspond to any input pictures to the NNPF are output as specified in the semantics of the NNPFA SEI message.

The nnpfc_complexity_info_present_flag equal to 1 specifies that one or more syntax elements that indicate the complexity of the NNPF associated with the nnpfc_id are present. nnpfc_complexity_info_present_flag equal to 0 specifies that no syntax elements that indicates the complexity of the NNPF associated with the nnpfc_id are present.

The nnpfc_parameter_type_idc equal to 0 indicates that the neural network uses only integer parameters. nnpfc_parameter_type_flag equal to 1 indicates that the neural network may use floating point or integer parameters. nnpfc_parameter_type_idc equal to 2 indicates that the neural network uses only binary parameters. nnpfc_parameter_type_idc equal to 3 is reserved for future use by ITU-T | ISO/IEC and shall not be present in bitstreams conforming to this edition of this document. Decoders conforming to this edition of this document shall ignore NNPFC SEI messages with nnpfc_parameter_type_idc equal to 3.

The nnpfc_log2_parameter_bit_length_minus3 equal to 0, 1, 2, and 3 indicates that the neural network does not use parameters of bit length greater than 8, 16, 32, and 64, respectively. When nnpfc_parameter_type_idc is present and nnpfc_log2_parameter_bit_length_minus3 is not present, the neural network does not use parameters of bit length greater than 1.

The nnpfc_num_parameters_idc indicates the maximum number of neural network parameters for the NNPF in units of a power of 2 048. nnpfc_num_parameters_idc equal to 0 indicates that the maximum number of neural network parameters is unknown. The value nnpfc_num_parameters_idc shall be in the range of 0 to 52, inclusive. Values of nnpfc_num_parameters_idc greater than 52 are reserved for future use by ITU-T | ISO/IEC and shall not be present in bitstreams conforming to this edition of this document. Decoders conforming to this edition of this document shall ignore NNPFC SEI messages with nnpfc_num_parameters_idc greater than 52.

If the value of nnpfc_num_parameters_idc is greater than zero, the variable maxNumParameters is derived as follows:

**[Table 25]**

| |
|---|
| ``` maxNumParameters = (2 048 << nnpfc_num_parameters_idc ) - 1 ``` |

It is a requirement of bitstream conformance that the number of neural network parameters of the NNPF shall be less than or equal to maxNumParameters.

The nnpfc_num_kmac_operations_idc greater than 0 indicates that the maximum number of multiply-accumulate operations per sample of the NNPF is less than or equal to nnpfc_num_kmac_operations_idc * 1 000. nnpfc_num_kmac_operations_idc equal to 0 indicates that the maximum number of multiply-accumulate operations of the network is unknown. The value of nnpfc_num_kmac_operations_idc shall be in the range of 0 to 232 - 2, inclusive.

The nnpfc_total_kilobyte_size greater than 0 indicates a total size in kilobytes required to store the uncompressed parameters for the neural network. The total size in bits is a number equal to or greater than the sum of bits used to store each parameter. nnpfc_total_kilobyte_size is the total size in bits divided by 8 000, rounded up. nnpfc_total_kilobyte_size equal to 0 indicates that the total size required to store the parameters for the neural network is unknown. The value of nnpfc_total_kilobyte_size shall be in the range of 0 to 232 - 2, inclusive.

The nnpfc_metadata_extension_num_bits equal to 0 specifies that nnpfc_reserved_metadata_extension is not present. nnpfc_metadata_extension_num_bits greater than 0 specifies the length, in bits, of nnpfc_reserved_metadata_extension. nnpfc_metadata_extension_num_bits shall be equal to 0 in this edition of this document. Values in the range of 1 to 2 048, inclusive, for nnpfc_metadata_extension_num_bits are reserved for future use by ITU-T | ISO/IEC and shall not be present in bitstreams conforming to this edition of this document. Decoders conforming to this edition of this document shall allow any value of nnpfc_metadata_extension_num_bits in the range of 0 to 2 048, inclusive. Values of nnpfc_metadata_extension_num_bits greater than 2 048 shall not be present in bitstreams conforming to this edition of this document and are not reserved for future use.

The nnpfc_reserved_metadata_extension shall not be present in bitstreams conforming to this edition of this document. However, decoders conforming to this edition of this document shall ignore the presence and value of nnpfc_reserved_metadata_extension. When present, the length, in bits, of nnpfc_reserved_metadata_extension is equal to nnpfc_metadata_extension_num_bits.

The nnpfc_reserved_zero_bit_b shall be equal to 0 in bitstreams conforming to this edition of this document. Decoders shall ignore NNPFC SEI messages in which nnpfc_reserved_zero_bit_b is not equal to 0.

The nnpfc_payload_byte[ i ] contains the i-th byte of a bitstream conforming to ISO/IEC 15938-17. The byte sequence nnpfc_payload_byte[ i ] for all present values of i shall be a complete bitstream that conforms to ISO/IEC 15938-17.

Neural-network post-filter activation SEI message

Table 26 shows an example of the NNPFA SEI message syntax.

**[Table 26]**

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_target_base_flag** | u(1) |
| **nnpfa_persistence_flag** | u(1) |
| **nnpfa_num_output_entries** | ue(v) |
| for( i = 0; i < nnpfa_num_output_entries; i++ ) | |
| **nnpfa_output_flag[** i ] | u(1) |
| } | |
| } | |

The neural-network post-filter activation (NNPFA) SEI message activates or de-activates the possible use of the target neural-network post-processing filter (NNPF), identified by nnpfa_target_id and nnpfa_target_base_flag, for post-processing filtering of a set of pictures. For a particular picture for which the NNPF is activated, the target NNPF is derived as follows:
- If nnpfa_target_base_flag is equal to 1, the target NNPF is the base NNPF with nnpfc_id equal to nnpfa_target_id.
- Otherwise (nnpfa_target_base_flag is equal to 0), the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

There can be several NNPFA SEI messages present for the same picture, for example, when the NNPFs are meant for different purposes or for filtering of different colour components.

The nnpfa_target_id indicates the target NNPF, which is specified by one or more NNPFC SEI messages that pertain to the current picture and have nnpfc_id equal to nnpfa_target_id. The value of nnpfa_target_id shall be in the range of 0 to 232 - 2, inclusive.

An NNPFA SEI message with a particular value of nnpfa_target_id shall not be present in a current PU unless one or both of the following conditions are true:
- Within the current CLVS there is an NNPFC SEI message with nnpfc_id equal to the particular value of nnpfa_target_id present in a PU preceding the current PU in decoding order.
- There is an NNPFC SEI message with nnpfc_id equal to the particular value of nnpfa_target_id in the current PU.

When a PU contains both an NNPFC SEI message with a particular value of nnpfc_id and an NNPFA SEI message with nnpfa_target_id equal to the particular value of nnpfc_id, the NNPFC SEI message shall precede the NNPFA SEI message in decoding order.

The nnpfa_cancel_flag equal to 1 indicates that the persistence of the target NNPF established by any previous NNPFA SEI message with the same nnpfa_target_id as the current SEI message is cancelled, i.e., the target NNPF is no longer used unless it is activated by another NNPFA SEI message with the same nnpfa_target_id as the current SEI message and nnpfa_cancel_flag equal to 0. nnpfa_cancel_flag equal to 0 indicates that the nnpfa_target_base_flag, nnpfa_persistence_flag, and nnpfa_num_output_entries follow.

The nnpfa_target_base_flag equal to 1 specifies that the target NNPF is the base NNPF with nnpfc_id equal to nnpfa_target_id. nnpfa_target_base_flag equal to 0 specifies that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

The nnpfa_persistence_flag specifies the persistence of the target NNPF for the current layer.

The nnpfa_persistence_flag equal to 0 specifies that the target NNPF may be used for post-processing filtering for the current picture only.

The nnpfa_persistence_flag equal to 1 specifies that the target NNPF may be used for post-processing filtering for the current picture and all subsequent pictures of the current layer in output order until one or more of the following conditions are true:
- A new CLVS of the current layer begins.
- The bitstream ends.
- A picture in the current layer associated with a NNPFA SEI message with the same nnpfa_target_id as the current SEI message and nnpfa_cancel_flag equal to 1 is output that follows the current picture in output order.

The target NNPF is not applied for this subsequent picture in the current layer associated with a NNPFA SEI message with the same nnpfa_target_id as the current SEI message and nnpfa_cancel_flag equal to 1.

Let the nnpfcTargetPictures be the set of pictures to which the last NNPFC SEI message with nnpfc_id equal to nnpfa_target_id that precedes the current NNPFA SEI message in decoding order pertains. Let nnpfaTargetPictures be the set of pictures for which the target NNPF is activated by the current NNPFA SEI message. It is a requirement of bitstream conformance that any picture included in nnpfaTargetPictures shall also be included in nnpfcTargetPictures.

The nnpfa_num_output_entries specifies the number of nnpfa_output_flag[ i ] syntax elements present in the NNPFA SEI message. The value of nnpfa_num_output_entries shall be in the range of 0 to NumInpPicsInOutputTensor, inclusive.

The nnpfa_output_flag[ i ] equal to 1 specifies that the NNPF-generated picture that corresponds to the input picture having index InpIdx[ i ] is output by the NNPF process activated by this NNPFA SEI message, where the NNPF process is specified in the semantics of the NNPFC SEI message. nnpfa_output_flag[ i ] equal to 0 specifies that the NNPF-generated picture that corresponds to the input picture having index InpIdx[ i ] is not output by the NNPF process activated by this NNPFA SEI message. When nnpfa_num_output_entries is less than NumInpPicsInOutputTensor, nnpfa_output_flag[ i ] is inferred to be equal to 1 for each value of i in the range of nnpfa_num_output_entries to NumInpPicsInOutputTensor - 1, inclusive.

Neural-network post-filter group characteristics SEI message

Table 27 shows an example of NNPFGC SEI message syntax.

**[Table 27]**

| | |
|---|---|
| nn_post_filter_group_characteristics( payloadSize ) { | **Descriptor** |
| **nnpfgc_id** | ue(v) |
| **nnpfgc_grouping_type** | ue(v) |
| if( nnpfgc_grouping_type = = 0 ∥ nnpfgc_grouping_type = = 2 ) | |
| **nnpfgc_purpose** | u(16) |
| **nnpfgc_num_members_minus2** | ue(v) |
| for( i = 0; i <= nnpfgc_num_members_minus2 + 1; i++ ) | |
| **nnpfgc_member_id[ i ]** | ue(v) |
| **nnpfgc_complexity_info_present_flag** | u(1) |
| if( nnpfgc_complexity_info_present_flag ) { | |
| **nnpfgc_parameter_type_idc** | u(2) |
| if( nnpfgc_parameter_type_idc != 2 ) | |
| **nnpfgc_log2_parameter_bit_length_minus3** | u(2) |
| **nnpfgc_num_parameters_idc** | u(6) |
| **nnpfgc_num_kmac_operations_idc** | ue(v) |
| **nnpfgc_total_kilobyte_size** | ue(v) |
| } | |
| } | |

The neural-network post-filter group characteristics (NNPFGC) SEI message specifies a neural network post-filter (NNPF) group. It is indicated by the SEI message if the NNPF group defines an NNPF cascade or defines NNPFs or NNPF groups of NNPF cascades that are alternatives to each other. The use of NNPF groups of NNPF cascades for specific pictures is indicated with neural-network post-filter group activation (NNPFGA) SEI messages.

The nnpfgc_id contains an identifying number that may be used to identify an NNPF group. The value of nnpfgc_id shall be in the range of 0 to 232 - 2, inclusive. Values of nnpfgc_id from 256 to 511, inclusive, and from 231 to 232 - 2, inclusive, are reserved for future use by ITU-T | ISO/IEC. Decoders conforming to this edition of this document encountering an NNPFGC SEI message with nnpfgc_id in the range of 256 to 511, inclusive, or in the range of 231 to 232 - 2, inclusive, shall ignore the SEI message. The value of nnpfgc_id shall not be equal to any nnpfc_id value of any NNPFC SEI message present in the same CLVS. When the value of nnpfgc_id of an NNPFGC SEI message nnpfgcSeiA is equal to the value of nnpfgc_id of another NNPFGC SEI message nnpfgcSeiB present in the same CLVS, nnpfgcSeiA and nnpfgcSeiB shall be identical.

The nnpfgc_grouping_type equal to 0 indicates that this SEI message specifies a group of cascaded neural-network post-filters.

The nnpfgc_grouping_type equal to 1 indicates that the NNPFs or NNPF groups identified by the nnpfgc_member_id[ i ] are alternatives to each other out of which the post-processor should select only one to be applied.

The nnpfgc_grouping_type equal to 2 indicates that this SEI message specifies a group of NNPFs that are intended to be used jointly and are activated in an alternating manner so that at most one of these NNPFs is activate for any picture.

The nnpfgc_grouping_type equal to 3 indicates that the NNPFs or NNPF groups identified by the nnpfgc_member_id[ i ] are intended to be used in parallel.

The nnpfgc_grouping_type equal to 4 indicates that the NNPFs or NNPF groups identified by the nnpfgc_member_id[ i ] are optional, i.e., may or may not be applied by the post-processor.

The value of nnpfgc_grouping_type shall be in the range of 0 to 255, inclusive. Values of nnpfgc_grouping_type in the range of 5 to 255, inclusive, are reserved for future specification by ITU-T | ISO/IEC and shall not be present in bitstreams conforming to this edition of this document. Decoders conforming to this edition of this document shall ignore NNPFGC SEI messages with nnpfgc_grouping_type in the range of 5 to 255, inclusive.

The nnpfgc_purpose has the semantics of nnpfc_purpose but with the exception that the semantics are specified for the NNPF group defined by this SEI message rather than the NNPF defined by an NNPFC SEI message.

The nnpfgc_num_members_minus2 plus 2 indicates the number of NNPFs or NNPF groups in the NNPF group that this SEI message defines.

The nnpfgc_member_id[ i ] indicates the i-th member in the NNPF group defined by this SEI message as follows:
- If there is an NNPF with nnpfc_id equal to nnpfgc_member_id[ i ] defined in the CLVS, the i-th member in the NNPF group defined by this SEI message is an NNPF that has nnpfc_id equal to nnpfgc_member_id[ i ].
- Otherwise (there is no NNPF with nnpfc_id equal to nnpfgc_member_id[ i ] defined in the CLVS), the i-th member in the NNPF group defined by this SEI message is an NNPF group with nnpfgc_id equal to nnpfgc_member_id[ i ].

When an nnpfgc_member_id[ i ] value references an nnpfgc_id value of an NNPFGC SEI message nnpfgcSei, it is a requirement of bitstream conformance that the NNPFGC SEI message nnpfgcSei shall have nnpfgc_grouping_type equal to 0. When nnpfgc_grouping_type is equal to 0 or 2, it is a requirement of bitstream conformance that there is an NNPF with nnpfc_id value equal to nnpfgc_member_id[ i ] defined in the CLVS. When nnpfgc_grouping_type is equal to 1, 3, or 4, it is a requirement of bitstream conformance that there is an NNPF with nnpfc_id value equal to nnpfgc_member_id[ i ] or an NNPF group with nnpfgc_id value equal to nnpfgc_member_id[ i ] defined in the CLVS.

When nnpfgc_grouping_type is equal to 0, the NNPFs with nnpfc_id equal to nnpfgc_member_id[ i ] are performed in cascade in increasing order of i, as activated by an NNPFGA SEI message with nnpfga_target_id equal to nnpfgc_id.

nnpfgc_complexity_info_present_flag, nnpfgc_parameter_type_idc, nnpfgc_log2_parameter_bit_length_minus3, nnpfgc_num_parameters_idc, nnpfgc_num_kmac_operations_idc, and nnpfgc_total_kilobyte_size have the semantics of nnpfc_complexity_info_present_flag, nnpfc_parameter_type_idc, nnpfc_log2_parameter_bit_length_minus3, nnpfc_num_parameters_idc, nnpfc_num_kmac_operations_idc, and nnpfc_total_kilobyte_size, respectively, but with the exception that the semantics are specified for the NNPF group defined by this SEI message rather than the NNPF defined by an NNPFC SEI message. When nnpfgc_grouping_type is equal to 1, nnpfgc_complexity_info_present_flag shall be equal to 0.

Neural-network post-filter group activation SEI message

Table 28 shows an example of the NNPFGA SEI message syntax.

**[Table 28]**

| | |
|---|---|
| nn_post_filter_group_activation( payloadSize ) { | **Descriptor** |
| **nnpfga_target_id** | ue(v) |
| **nnpfga_cancel_flag** | u(1) |
| if( !nnpfga_cancel_flag ) { | |
| **nnpfga_persistence_flag** | u(1) |
| **nnpfga_num_filters_minus2** | ue(v) |
| for( i = 0; i <= nnpfga_num_filters_minus2 + 1; i++ ) { | |
| **nnpfga_target_base_flag[** i ] | u(1) |
| **nnpfga_input_all_pics_flag[** i ] | u(1) |
| if( !nnpfga_input_all_pics_flag[ i ] ) { | |
| **nnpfga_num input_pics_minus1[** i ] | ue(v) |
| for( j = 0; j <= nnpfga_num_input_pics_minus1[ i ]; j++ ) | |
| **nnpfga_num_input_pics_minus1[** i ] | ue(v) |
| } | |
| **nnpfga_num_output_entries[** i ] | ue(v) |
| for( j = 0; j < nnpfga_num_output_entries[ i ]; j++ ) | |
| **nnpfga_output_flag[** i ][ j ] | u(1) |
| } | |
| } | |
| } | |

The neural-network post-filter group activation (NNPFGA) SEI message activates or de-activates the possible use of the target neural-network post-processing filter group (NNPFG) of NNPF groups, identified by nnpfga_target_id, for post-processing filtering of a set of pictures. nnpfgc_grouping_type for the identfied NNPF group shall be equal to 0 (cascade) or 1 (alternatives). When nnpfgc_grouping_type is equal to 1, each member of the group shall have the same number of input pictures and NNPF output pictures. For a particular picture for which the NNPFG is activated, the target NNPFG is the NNPFG specified by the last NNPFGC SEI message with nnpfgc_id equal to nnpfga_target_id, that precedes the first VCL NAL unit of the current picture in decoding order and the NNPFs of the target NNPFG are defined by the NNPFC SEI messages that have nnpfc_id equal to any nnpfgc_member_id[ i ] value of the target NNPFG and are present in the current picture unit or precede the current picture in decoding order.

Use of this SEI message requires the definition of the following variables:
- Input picture width and height in units of luma samples, denoted herein by InitCroppedWidth[ idx ] and InitCroppedHeight[ idx ], respectively, of the candidate input pictures with index idx in the range of 0 to numCandInputPics - 1, inclusive, that may be used as input for the NNPFG.
- Luma sample array InitCroppedYPic[ idx ] and chroma sample arrays InitCroppedCbPic[ idx ] and InitCroppedCrPic[ idx ], when present, of the candidate input pictures with index idx in the range of 0 to numCandInputPics - 1, inclusive, that may be used as input for the NNPFG.
- Bit depth BitDepthY for the luma sample array of the candidate input pictures.
- Bit depth BitDepthC for the chroma sample arrays, if any, of the candidate input pictures.
- A chroma format indicator, denoted herein by ChromaFormatIdc
- When nnpfc_auxiliary_inp_idc is equal to 1, a filtering strength control value array StrengthControlVal[ idx ] that shall contain real numbers in the range of 0 to 1, inclusive, of the candidate input pictures with index idx in the range of 0 to numCandInputPics - 1, inclusive.

Candidate input picture with index 0 corresponds to the picture for which the NNPFG is activated by this NNPFGA SEI message. Candidate input picture with index i in the range of 1 to numCandInputPics - 1, inclusive, precedes the candidate input picture with index i - 1 in output order. Let candInputPicList[ 0 ] be the list of candidate input pictures in inverse output order.

The nnpfga_target_id indicates the target NNPFG, which is specified by the NNPFGC SEI message that pertains to the current picture and have nnpfgc_id equal to nnpfga_target_id.

The value of nnpfga_target_id shall be in the range of 0 to 232 - 2, inclusive.

An NNPFGA SEI message with a particular value of nnpfga_target_id shall not be present in a current PU unless there is an NNPFGC SEI message with nnpfgc_id equal to the particular value of nnpfga_target_id and nnpfgc_grouping_type equal to 0 present in the current PU or in a PU that precedes the current PU in decoding order within the current CLVS.

When a PU contains both an NNPFGC SEI message with a particular value of nnpfgc_id and an NNPFGA SEI message with nnpfga_target_id equal to the particular value of nnpfgc_id, the NNPFGC SEI message shall precede the NNPFGA SEI message in decoding order.

The nnpfga_cancel_flag equal to 1 indicates that the persistence of the target NNPFG established by any previous NNPFGA SEI message with the same nnpfga_target_id as the current SEI message is cancelled, i.e., the target NNPFG is no longer used unless it is activated by another NNPFGA SEI message with the same nnpfga_target_id as the current SEI message and nnpfga_cancel_flag equal to 0. nnpfga_cancel_flag equal to 0 indicates that the target NNPFG is activated for use.

The nnpfga_persistence_flag specifies the persistence of the target NNPFG for the current layer.

The nnpfga_persistence_flag equal to 0 specifies that the target NNPFG may be used for post-processing filtering for the current picture only.

The nnpfga_persistence_flag equal to 1 specifies that the target NNPFG may be used for post-processing filtering for the current picture and all subsequent pictures of the current layer in output order until one or more of the following conditions are true:
- A new CLVS of the current layer begins.
- The bitstream ends.
- A picture in the current layer associated with a NNPFGA SEI message with the same nnpfga_target_id as the current SEI message that follows the current picture in output order.

The target NNPFG is not applied for this subsequent picture in the current layer associated with a NNPFGA SEI message with the same nnpfga_target_id as the current SEI message.

Let the nnpfgcTargetPictures be the set of pictures to which the last NNPFGC SEI message with nnpfgc_id equal to nnpfga_target_id that precedes the current NNPFGA SEI message in decoding order pertains. Let nnpfgaTargetPictures be the set of pictures for which the target NNPFG is activated by the current NNPFGA SEI message. It is a requirement of bitstream conformance that any picture included in nnpfgaTargetPictures shall also be included in nnpfgcTargetPictures.

The nnpfga_num_filters_minus2 plus 2 indicates the number of NNPFs in the NNPFG that this SEI message activates. The value of nnpfga_num_filters_minus2 shall be equal to the value of nnpfgc_num_members_minus2 in an NNPFGC SEI message with nnpfgc_id equal to nnpfga_target_id.

The nnpfga_target_base_flag[ i ] equal to 1 specifies that the i-th NNPF in the target NNPFG is the base NNPF with nnpfc_id equal to nnpfgc_member_id[ i ] in an NNPFGC SEI message with nnpfgc_id equal to nnpfga_target_id. nnpfga_target_base_flag[ i ] equal to 0 specifies that the i-th NNPF in the target NNPFG is the NNPF specified by the last NNPFC SEI message that has nnpfc_id equal to nnpfgc_member_id[ i ] in an NNPFGC SEI message with nnpfgc_id equal to nnpfga_target_id, precedes the first VCL NAL unit of the current picture in decoding order, and is not a repetition of the NNPFC SEI message that contains the base NNPF.

The nnpfga_input_all_pics_flag[ i ] equal to 1 specifies that the input pictures to the i-th NNPF are selected from the list of candidate input pictures candInputPicList[ i ] without skipping. nnpfga_input_all_pics_flag[ i ] equal to 0 specifies that the input pictures to the i-th NNPF are selected from the list of candidate input pictures candInputPicList[ i ] in a manner that some candidate input pictures are skipped.

The nnpfga_num_input_pics_minus1 [ i ] specifies the number of input pictures for the i-th NNPF in the target NNPFG. When present, nnpfga_num_input_pics_minus1[ i ] shall be equal to nnpfc_num_input_pics_minus1 for an NNPF with nnpfc_id equal to nnpfgc_member_id[ i ] of an NNPFGC SEI message with nnpfgc_id equal to nnpfga_target_id. When not present, nnpfga_num_input_pics_minus1[ i ] is inferred to be equal to nnpfc_num_input_pics_minus1 for an NNPF with nnpfc_id equal to nnpfgc_member_id[ i ] in an NNPFGC SEI message with nnpfgc_id equal to nnpfga_target_id.

The nnpfga_input_pic_skip_count[ i ][ j ] specifies a j-th picture count that is skipped in the list of candidate input pictures candInputPicList[ i ] when selecting input pictures for the NNPF activated by the i-th loop entry. When nnpfga_input_pic_skip_count[ i ][ j ] is not present, it is inferred to be equal to 0 for all values of j in the range of 0 to nnpfga_num_input_pics_minus1[ i ], inclusive. The variable numCandInputPics, which indicates the number of candidate input pictures to the NNPFG, is derived as follows:

**[Table 29]**

| |
|---|
| ``` numCandinputPics = 0 for( j = 0; j <= nnpfga_num_input_pics_minus1[ 0 ]; j++ ) numCandInputPics += 1 + nnpfga_input_pic_skip_count[ 0 ][ j ] ``` |

Let candInputPicList[ m ] for m in the range of 1 to nnpfga_num_filters_minus2 + 1, inclusive, be a list of pictures in inverse output order that is initially empty and formed in decreasing order of n in the range of 0 to m - 1, inclusive, by including each picture that is output by the NNPF process of the n-th loop entry that has no corresponding picture already present in candInputPicList[ m ], and lastly including each picture present in candInputPicList[ 0 ] that has no corresponding picture already present in candInputPicList[ m ].

When a candidate input picture candInputPicList[ m ][ idx ] for any value of m in the range of 1 to nnpfga_num_filters_minus2 + 1, inclusive, is an NNPF output picture of the n-th NNPF process with the value of n being less than the value of m, the width and height of the candidate input picture are respectively equal to nnpfcOutputPicWidth and nnpfcOutputPicHeight of the NNPF output picture.

The list of input pictures inputPicList[ m ] to the NNPF of the m-th loop entry is derived as follows:

**[Table 30]**

| |
|---|
| ``` for( k = 0, candldx = 0; k <= nnpfga_num_input_pics_minus1[ m ]; k++, candIdx++ ) { candldx += nnpfga_input_pic_skip_count[ m ][ k ] inputPicList[ m ][ k ] = candInputPicList[ m ][ candIdx ] } ``` |

It is a requirement of bitstream conformance that candIdx shall not exceed the number of pictures in candInputPicList[ m ].

It is a requirement of bitstream conformance that the pictures present in inputPicList[ m ], for any value of m in the range of 1 to nnpfga_num_filters_minus2 + 1, inclusive, shall have the same width, height, bit depth, and chroma format.

For purposes of interpretation of the NNPFC SEI message with nnpfc_id equal to nnpfgc_member_id[ i ] in an NNPFGC SEI message with nnpfgc_id equal to nnpfga_target_id, the following variables are specified for the i-th loop entry:
- The variables BitDepthY, BitDepthC, and ChromaFormatIdc are used as provided for the interpretation of this SEI message.
- CroppedWidth and CroppedHeight are set equal to the width and height of the pictures in inputPicList[ i ], respectively, in units of luma samples.
- For each input picture k in the range of 0 to nnpfga_num_input_pics_minus1[ i ], inclusive, the following applies:
- CroppedYPic[ k ], CroppedCbPic[ k ], and CroppedCrPic[ k ], when present, are set equal to respective sample array of inputPicList[ i ][ k ]
- When nnpfc_auxiliary_inp_idc is equal to 1 for the NNPF with nnpfc_id equal to nnpfgc_member_id[ i ] in an NNPFGC SEI message with nnpfgc_id equal to nnpfga_target_id, the following applies:
- It is a requirement of bitstream conformance that inputPicList[ i ][ k ] is the same as candInputPicList[ 0 ][ idx ] for any value of idx in the range of 0 to numCandInputPics - 1, inclusive.
- StrengthControlVal[ k ] is set equal to InitStrengthControlVal[ idx ].

The nnpfga_num_output_entries[ i ] specifies the number of nnpfga_output_flag[ i ][ j ] syntax elements present in the NNPFGA SEI message. The value of nnpfga_num_output_entries[ i ] shall be in the range of 0 to NumInpPicsInOutputTensor, inclusive, for an NNPF with nnpfc_id equal to nnpfgc_member_id[ i ] of an NNPFGC SEI message with nnpfgc_id equal to nnpfga_target_id..

The nnpfga_output_flag[ i ][ j ] equal to 1 specifies that the NNPF-generated picture that corresponds to the input picture having index InpIdx[ j ] derived for the i-th NNPF of the target NNPFG is output by the NNPF process activated by this loop entry, where the NNPF process is specified in the semantics of the NNPFC SEI message. nnpfga_output_flag[ i ][ j ] equal to 0 specifies that the NNPF-generated picture that corresponds to the input picture having index InpIdx[ j ] derived for the i-th NNPF of the target NNPFG is not output by the NNPF process activated by this loop entry. When nnpfga_num_output_entries[ i ] is less than NumInpPicsInOutputTensor derived for the i-th NNPF of the target NNPFG, nnpfga_output_flag[ i ][ j ] is inferred to be equal to 1 for each value of i in the range of nnpfga_num_output_entries[ i ] to NumInpPicsInOutputTensor - 1, inclusive.

Let NnpfgaOutputPicList, which is the list of pictures output by NNPF process of the NNPFG in output order, be initially empty and formed in decreasing order of n in the range of 0 to nnpfga_num_filters_minus2 + 1, inclusive, by including each picture that is output by the NNPF process of the n-th loop entry that has no corresponding picture already present in NnpfgaOutputPicList.

Source Picture Timing Information (SPTI)

Table 31 shows an example of SPTI syntax.

**[Table 31]**

| | |
|---|---|
| source_picture_timing_info( payloadSize ) { | **Descriptor** |
| **spti_cancel_flag** | u(1) |
| if( !spti_cancel_flag ) { | |
| **spti_persistence_flag** | u(1) |
| **spti_source_timing_equals_output_timing_flag** | u(1) |
| if( !spti_source_timing_equals_output_timing_flag ) { | |
| **spti_source_type_present_flag** | u(1) |
| if( spti_source_type_present_flag ) | |
| **spti_source_type** | u(16) |
| **spti_time_scale** | u(32) |
| **spti_num_units_in_elemental_interval** | u(18) |
| if( spti_persistence_flag ) | |
| **spti_max_sublayers_minus_1** | u(3) |
| for( i = 0; i <= spti_max_sublayers_minus1; i++ ) { | |
| **spti_sublayer_interval_scale_factor[** i ] | ue(v) |
| **spti_sublayer_synthesized_picture_flag[** i ] | u(1) |
| } | |
| } | |
| } | |
| } | |

The source picture timing information (SPTI) SEI message indicates the temporal distance between source pictures associated with the corresponding decoded output pictures prior to encoding, e.g., for camera-captured content, the temporal distance between source pictures is the difference between the time at which an image sensor was exposed to produce a source picture associated with the current decoded picture and the time at which the image sensor was exposed to produce the source picture associated with a previous decoded picture in output order. The information provided by the SPTI SEI message pertains only for picture(s) starting from the picture in the current layer in the access unit that contains the SPTI SEI message and all subsequent pictures of the current layer in output order based on its persistence.

The spti_cancel_flag equal to 1 indicates that the SPTI SEI message cancels the persistence of any previous SPTI SEI message in output order that applies to the current layer. spti_cancel_flag equal to 0 indicates that source picture timing information follows.

The spti_persistence_flag specifies the persistence of the SPTI SEI message for the current layer.

The spti_persistence_flag equal to 0 specifies that the SPTI SEI message applies to the current decoded picture only.

The spti_persistence_flag equal to 1 specifies that the SPTI SEI message applies to the current decoded picture and persists for all subsequent pictures of the current layer in output order until one or more of the following conditions are true:
- A new CLVS of the current layer begins.
- The bitstream ends.
- A picture in the current layer in an AU associated with an SPTI SEI message is output that follows the current picture in output order.

The spti_source_timing_equals_output_timing_flag equal to 1 indicates the timing of source pictures is the same as the timing of corresponding decoded output pictures. spti_source_timing_equals_output_timing_flag equal to 0 indicates the timing of source pictures might not be the same as the timing of corresponding decoded output pictures.

When spti_source_timing_equals_output_timing_flag is equal to 1 and a picture timing SEI message is present for the current picture, source picture timing could be determined from information conveyed in the picture timing SEI message.

The spti_source_type_present_flag equal to 1 indicates the syntax element spti_source_type is present in the SEI message. spti_source_type_present_flag equal to 0 indicates the syntax element spti_source_type is not present in the SEI message.

The spti_source_type indicates the timing relationship between source pictures and corresponding decoded output pictures as specified in Table 32,

**[Table 32]**

| **bitMask** | **Interpretation** |
|---|---|
| 0x01 | Slow motion: The absolute value of the temporal distance between consecutive source pictures is likely to be less than the temporal distance between corresponding decoded output pictures. |
| 0x02 | Sped-up motion: The absolute value of the temporal distance between consecutive source pictures is likely to be greater than the temporal distance between corresponding decoded output pictures. |
| 0x04 | High-speed imaging: The absolute value of the temporal distance between consecutive source pictures is likely to be less than 1/120 seconds. |
| 0x08 | Time-lapse imaging: The temporal distance between source pictures is likely to be greater than 1.001/24 seconds. |
| 0x10 | Temporal reversal: The absolute value of the temporal distance between consecutive source pictures is indicated to be negative (i.e., decoded pictures are output in reverse temporal order relative to the timing of the corresponding source pictures). |
| 0x20 | Still image / freeze frame: The temporal distance between source pictures is likely to be 0 (i.e., two or more decoded pictures are likely to represent the same source picture). |
| 0x40 | Sporadic or event-driven: The temporal distance between source pictures is likely to be non-constant. |

where ( spti_source_type & bitMask ) not equal to 0 indicates that the timing relationship has the interpretation associated with the bitMask value in Table 32. When spti_source_type is greater than 0 and ( spti_source_type & bitMask ) is equal to 0, the interpretation associated with the bitMask value is not applicable to the SPTI SEI message. When spti_source_type is equal to 0, the timing relationship may be specified by the application.

The value of spti_source_type shall be in the range of 0 to 127, inclusive, in bitstreams conforming to this edition of this document. Values of 128 to 255, inclusive, for spti_source_type are reserved for future use by ITU-T | ISO/IEC and shall not be present in bitstreams conforming to this edition of this document. Decoders conforming to this document shall ignore SPTI SEI messages with spti_source_type in the range of 128 to 255, inclusive.

The value of ( spti_source_type & 0x04 ) & ( spti_source_type & 0x08 ) shall be zero (i.e., spti_source_type shall not simultaneously indicate high-speed imaging and time-lapse imaging).

spti_time_scale specifies the number of time units that pass in one second. The value of spti_time_scale shall not be equal to 0. For example, a time coordinate system that measures time using a 27 MHz clock has an spti_time_scale of 27,000,000.

spti_num_units_in_elemental_interval specifies the number of time units of a clock operating at the frequency spti_time_scale Hz that corresponds to the indicated elemental source picture interval of consecutive pictures in output order in the CLVS.

The indicated elemental source picture interval, also to be denoted by the variable ElementalSourcePictureInterval, in units of seconds, is equal to the quotient of spti_num_units_in_elemental_interval divided by spti_time_scale. For example, to represent an elemental source picture interval equal to 0.04 seconds, spti_time_scale may be equal to 27,000,000 and spti_num_units_in_elemental_interval may be equal to 1,080,000.

spti_max_sublayers_minus_1 plus 1 specifies the maximum number of temporal sublayers for which picture interval scale factor (spti_sublayer_interval_scale_factor[ i ]) and synthesized flag (spti_sublayer_synthesized_picture_flag[ i ]) information is signalled. When spti_max_sublayers_minus_1 is not present, it is inferred to be equal to TemporalId..

spti_sublayer_interval_scale_factor[ i ], when present, specifies a scale factor used in determining the source picture interval of corresponding consecutive pictures in output order in the CLVS having TemporalId less than or equal to i. The value 0 may be used to indicate that the source picture corresponding to the current decoded output picture is identical to the source picture corresponding to the previous decoded output picture.

The indicated source picture interval associated with output pictures having TemporalId less than or equal to i, denoted by the variable SourcePictureInterval[ i ], in units of seconds, is derived as follows:

**[Table 33]**

| |
|---|
| ``` SourcePictureInterval[ i ] = ElementalSourcePictureInterval *spti_sublayer_interval_scale_factor[ i ] * ( 1 - 2 * temporalReversalFlag ) ``` |

The variable temporalReversalFlag is equal to ( spti_source_type & 0x10 )? 1 : 0.

spti_sublayer_synthesized_picture_flag[ i ], when present, equal to 1 indicates that decoded output pictures belonging to the ith temporal sublayer are synthesized and do not correspond to unmodified original source pictures. spti_sublayer_synthesized_picture_flag[ i ] equal to 0 provides no such indication. When not present, the value of spti_sublayer_synthesized_picture_flag[ i ] is inferred to be equal to 0.

When the TemporalId of an SPTI SEI message is greater than 0, and the SPTI SEI message persists for one or more pictures with lower TemporalId, an encoder can repeat the information of the SPTI SEI message by including it in one or more SPTI SEI messages with lower TemporalId, in order to avoid loss of information when pictures in temporal sublayer(s) are lost or removed.

SEI processing order SEI message (SPO SEI message)

Table 34 shows an example of the SEI processing order SEI message syntax.

**[Table 34]**

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| po_sei_wrapping_flag[ i ] | u(1) |
| **po_sei_importance_flag[** i ] | u(1) |
| **po_sei_payload_type[** i ] | u(13) |
| **po_sei_prefix_flag[** i ] | u(1) |
| **po_sei_prefix_flag[** i ] | u(8) |
| } | |
| for( i = 0; i < po_num_sei_messages_minus2 + 2; i++ ) | |
| if( po_sei_prefix_flag[ i ] ) { | |
| **po_num_bits_in_prefix_indication_minus1[** i ] | u(8) |
| for( j = 0; j <= po_num_bits_in_prefix_indication_minus1[ i ]; j++ ) | |
| **po_sci_prefix_data_bit[** i ][ j ] | u(1) |
| while( !byte_aligned( ) ) | |
| **po_byte_alignment_bit_equal_to_one** /* equal to 1 */ | f(1) |
| } | |
| } | |

The SEI processing order SEI message carries information indicating the preferred processing order, as determined by the encoder (i.e., the content producer), for a group of types of SEI messages that may be present in a CVS.

The semantics of the SEI processing order SEI message uses the concept of types of SEI messages. SEI messages that have different payloadType values are considered different types of SEI messages. Additionally, different SEI messages that have the same payloadType value but are differentiated by values of syntax elements in the SEI payload are considered different types of SEI messages. Such differentiation by values of syntax elements in the SEI payload is to be performed by comparing values sent using po_sei_prefix_data_bit[ i ][ j ] syntax elements (when present) or values sent as SEI messages within a processing order nesting SEI message (when present). For example, neural-network post-filter characteristics (NNPFC) SEI messages can be differentiated by having different nnpfc_id values.

When an SEI processing order SEI message with a particular value of po_id is present in any access unit of a CVS, an SEI processing order SEI message with that particular value of po_id shall be present in the first access unit of the CVS in decoding order. The number of SEI messages and the payloadType codes of the SEI messages indicated within each SEI processing order SEI message with the same value of po_id persists in decoding order from the current access unit until the end of the CVS in output order.

The SEI processing order SEI message can carry one or more SEI prefix indications of a particular payloadType. When present, each SEI prefix indication is a bit string that follows the SEI payload syntax of that value of payloadType and contains a number of complete syntax elements starting from the first syntax element in the SEI payload. These SEI prefix indications should provide sufficient information to determine the specific processing order for types of SEI messages having the same value of payloadType but a different preferred processing order.

The po_id contains an identifying number to identify the SEI processing order SEI message.

Each SEI message in the group of SEI messages for which preferred processing order information is provided in an SEI processing order SEI message is identified by the syntax elements po_sei_payload_type[ i ], po_sei_wrapping_flag[ i ], po_sei_processing_order[ i ] and, when present, po_num_bits_in_prefix_indication_minus1[ i ] and po_prefix_data_bit[ i ][ j ].

For each picture, there can be multiple persisting or activated SEI messages belonging to one or more groups of SEI messages.

Groups of SEI messages can be alternatives to each other, i.e., such that at most one group is chosen to be applied, or they can be complementary, i.e., such that more than one group is chosen and applied separately, with each group generating one output.

The po_num_sei_messages_minus2 plus 2 indicates the number of types of SEI messages for which the preferred order of processing is indicated in the SEI processing order SEI message.

The po_sei_wrapping_flag[ i ] equal to 1 specifies that one or more processing order nesting SEI messages with both of the following constraints should be present:
- pon_target_po_id[ j ] with any value of j is equal to po_id.
- There is a k-th loop entry in the SEI processing order nesting SEI message such that the payloadType of the k-th nested SEI message is equal to po_sei_payload_type[ i ] and pon_processing_order[ k ] is equal to po_sei_processing_order[ i ].

When po_sei_wrapping_flag[ i ] is equal to 0, an SEI message with payloadType equal to po_sei_payload_type[ i ] (and, when po_sei_prefix_flag[ i ] equal to 1, prefix data that matches the values of po_sei_prefix_data_bit[ i ][ j ]) should be present outside of the processing order nesting SEI message. However, if po_sei_wrapping_flag[ i ] is equal to 0 and no SEI message is present with payloadType equal to po_sei_payload_type[ i ] or po_sei_wrapping_flag[ i ] is equal to 0 and po_sei_prefix_flag[ i ] is equal to 1 and no SEI message is present with with payloadType equal to po_sei_payload_type[ i ] that has prefix data that matches the values of po_sei_prefix_data_bit[ i ][ j ], the following applies:
- If po_sei_importance_flag[ i ] is equal to 1, the decoder should ignore the entire SEI processing order SEI message.
- Otherwise, the decoder should ignore all data associated with the loop variable value of i.

The po_sei_wrapping_flag[ i ] equal to 1 enables SEI messages to be carried within the processing order nesting SEI message to prevent such SEI messages from being incorrectly interpreted by decoders that do not process the SEI processing order SEI message. Thus, po_sei_wrapping_flag[ i ] equal to 1 is intended to be used when po_sei_wrapping_flag[ i ] equal to 0 can lead to unintended results being produced by such decoders.

The po_sei_importance_flag[ i ] indicates the degree of importance determined by the encoder for the type of SEI message with index i.

If the decoding system cannot interpret or does not support the functionality indicated by any indicated SEI message that has po_sei_importance_flag[ i ] equal to 1, it should ignore the entire SEI processing order SEI message.

The po_sei_payload_type[ i ] specifies the payloadType value of the i-th type of SEI message.

The po_sei_prefix_flag[ i ] equal to 1 specifies that po_num_bits_in_prefix_indication_minus1[ i ] and some po_sei_prefix_data_bit[ i ][ j ] syntax elements are present. po_sei_prefix_flag[ i ] equal to 0 specifies that these syntax elements are not present.

SeiProcessingOrderSeiList is set to consist of the payloadType values 3, 4, 5, 19, 137, 142, 144, 147, 148, 149, 165, 177, 210, and 211. The value of po_sei_payload_type[ i ] for each i in the range of 0 to po_num_sei_messages_minus2 + 1, inclusive, shall be equal to a value in SeiProcessingOrderSeiList.

The po_sei_processing_order[ i ] indicates the preferred order of processing of the i-th type of SEI message for which preferred processing order information is provided in the SEI processing order SEI message. For any two different integer values of m and n, po_sei_processing_order[ m ] less than po_sei_processing_order[ n ] indicates that the type of SEI message associated with index m should be processed before the type of SEI message associated with index n, and po_sei_processing_order[ m ] equal to po_sei_processing_order[ n ] indicates that there is no preferred order of processing between the types of SEI messages associated with indexes m and n (e.g., they can indicate different properties that are both applicable at that stage, or alternative processes that can be applied, or one can indicate a property and the other can indicate a process).

For i greater than 0, po_sei_processing_order[ i ] shall be greater than or equal to po_sei_processing_order[ i - 1 ].

The po_num_bits_in_prefix_indication_minus1[ i ] and po_sei_prefix_data_bit[ i ][ j ], when present, have the same semantics as the num_bits_in_prefix_indication_minus1[ i ] and sei_prefix_data_bit[ i ][ j ] syntax elements of the SEI prefix indication SEI message, with prefix_sei_payload_type replaced by po_sei_payload_type[ i ].

When more than one SEI processing order SEI message with a particular value of po_id is present in a CVS, the values of po_num_sei_messages_minus2 and, for each value of i, the values of po_sei_wrapping_flag[ i ], po_sei_prefix_flag[ i ], po_sei_importance_flag[ i ], po_sei_payload_type[ i ], po_sei_processing_order[ i ] shall be the same as in the other SEI processing order SEI messages in the CVS with the same value of po_id.

The po_byte_alignment_bit_equal_to_one shall be equal to 1.

Processing order nesting SEI message (PON SEI message)

Table 35 shows an example of the processing order nested SEI message syntax.

**[Table 35]**

| | |
|---|---|
| processing_order_nesting( payloadSize ) { | **Descriptor** |
| **pon_num_po_ids_minus1** | u(8) |
| for( i = 0; i <= pon_num_po_ids_minus1; i++ ) | |
| **pon_target_po_id[** i ] | u(8) |
| **pon_num_seis_minus1** | u(8) |
| for( i = 0; i <= pon_num_seis_minus1; i++ ) { | |
| **pon_processing_order[** i ] | u(8) |
| sei_message( ) | |
| } | |
| } | |

The processing order nesting SEI message includes one or more SEI messages that should be applied only as parts of the processing chain identified by an associated SEI processing order SEI message and should not be applied in a manner that would contradict with the processing chain identified by the associated SEI processing order SEI message.

The SEI messages contained in the processing order nesting SEI message are also referred to as the processing-order-nested SEI messages.

The persistence of all the SEI messages included in the same processing order nesting SEI message shall be the same.

The pon_num_po_ids_minus1 plus 1 specifies the number of the SEI processing order SEI messages SEI associated with this processing order nesting SEI message.

The pon_target_po_id[ i ] indicates the po_id of the i-th associated SEI processing order SEI message.

The pon_num_seis_minusl plus 1 specifies the number of the processing-order-nested SEI messages that are included in this SEI message.

The pon_processing_order[ i ] specifies the position of the i-th processing-order-nested SEI message within the processing order defined by the associated SEI processing order SEI message. When i is greater than 0, pon_processing_order[ i ] shall be greater than or equal to pon_processing_order[ i - 1 ].

For each associated SEI processing order SEI message there shall be at least one value of i in the range of 0 to pon_num_seis_minus1, inclusive, in the processing order nesting SEI message for which the associated SEI processing order SEI message has some entry k for which all of the following are true:
- po_sei_processing_order[ k ] is equal to pon_processing_order[ i ]
- po_sei_payload_type[ k ] is equal to the payloadType value of the i-th processing-order-nested SEI message.
- When po_sei_prefix_flag[ k ] is equal to 1, po_sei_prefix_data_bit[ k ][ j ] for j in the range of 0 to po_num_bits_in_prefix_indication_minus1[ k ], inclusive, contain the same content as the po_num_bits_in_prefix_indication_minus1[ k ] plus 1 initial bits of the SEI message payload of the i-th processing-order-nested SEI message.

The i-th processing-order-nested SEI message should be applied as the k-th loop entry of the associated SEI processing order SEI message.

### Problem(s) description

Although it is envisioned that when NNPF SEI messages are included in sei processing order SEI message, they will be included with some prefix information (i.e., to include nnpfc_id to differentiate different NNFPC SEI messages), we should also anticipate the case when an NNPFC SEI message is included in sei processing order SEI message without prefix information and two more NNPFC SEI messages (e.g., nnpfc_A and nnpfc_B) are also included with prefix information. In such case, it is not clear how to interpret such situation as whether nnpfc_A and nnpfc_B should be considered included in the NNPFC in the sei processing order SEI message without prefix information, or they should be considered excluded.

The situation described above may also be applicable to SEI messages with other payload types as well. Therefore, our recommendation is that the solution to clarify / handle the situation above should apply to not only NNPF SEI messages but also any other SEI messages.

Even if there is constraint to disallow the above case, it may be interpreted that such constraint should apply only for SEI messages that are included in SEI processing order SEI messages but not contained in processing order nesting SEI message. This is because, SEI message that is included in a processing order nesting SEI message would not have difficult to be identified.

### Embodiments

The present disclosure provides solutions to the problem described above. Each embodiment may be applicable individually or in combinations.

The embodiments proposed by the present disclosure are summarized as follows.

It may be defined a constraint to disallow situation of mix of SEI messages with the same payload type to be included in sei processing order SEI message in which one of the SEI message has no prefix information while the rest have prefix information.

It may further be specified that the above constraint applies only for SEI messages that are included in SEI processing order SEI messages but not included in processing order nesting SEI message.

In one alternative, it is specified that when two or more SEI messages with the same payload types are included in one or more sei processing order SEI messages and one of the SEI messages has no prefix information while the rest have, processing order of those SEI messages are treated independently (i.e., the ones with no prefix information represent all the SEI messages of that type but excluding those included in the sei processing order SEI message with prefix information).

In another alternative, it is specified that when two or more SEI messages with the same payload types are included in one or more sei processing order SEI messages and one of the SEI messages has no prefix information while the rest have, those SEI messages with prefix information are considered part of the one without prefix information and both of the following apply:

The sei processing order SEI message that contains the SEI messages with prefix information shall not contain SEI message with other payload type.

The SEI message with no prefix information and the SEI messages with prefix information shall not be included in the same sei processing order SEI message.

### Embodiment 1-1

Embodiment 1-1 provides an explanation of Summary described above.

The semantics of the SEI processing order SEI message uses the concept of types of SEI messages. SEI messages that have different payloadType values are considered different types of SEI messages. Additionally, different SEI messages that have the same payloadType value but are differentiated by values of syntax elements in the SEI payload are considered different types of SEI messages. Such differentiation by values of syntax elements in the SEI payload is to be performed by comparing values sent using po_sei_prefix_data_bit[ i ][ j ] syntax elements (when present) or values sent as SEI messages within a processing order nesting SEI message (when present). For example, neural-network post-filter characteristics (NNPFC) SEI messages can be differentiated by having different nnpfc_id values.

When an SEI message of a particular payloadType value is included in an sei processing order SEI message without prefix information, there shall be no SEI message with the same payloadType value included in an sei processing order SEI message, i.e., in the same or different sei processing order SEI message, with prefix information present.

### Embodiment 1-2

Embodiment 1-2 provides an explanation of Summary described above.

The semantics of the SEI processing order SEI message uses the concept of types of SEI messages. SEI messages that have different payloadType values are considered different types of SEI messages. Additionally, different SEI messages that have the same payloadType value but are differentiated by values of syntax elements in the SEI payload are considered different types of SEI messages. Such differentiation by values of syntax elements in the SEI payload is to be performed by comparing values sent using po_sei_prefix_data_bit[ i ][ j ] syntax elements (when present) or values sent as SEI messages within a processing order nesting SEI message (when present). For example, neural-network post-filter characteristics (NNPFC) SEI messages can be differentiated by having different nnpfc_id values.

When the i-th SEI message seiA in any SEI processing order SEI message has po_sei_wrapping_flag[ i ] and po_sei_prefix_flag[ i ] both equal to 0, there shall be no SEI message seiB included in the same or different SEI processing order message in the current CVS in which all of the following are true:
- The payloadType of seiB is the same as the payloadType of seiA.
- The value of po_sei_wrapping_flag[ i ] of seiB is equal to 0.
- The value of po_sei_prefix_flag[ i ] of seiB is equal to 1.

### Embodiment 2

Embodiment 2 provides an explanation of Summary described above.

The semantics of the SEI processing order SEI message uses the concept of types of SEI messages. SEI messages that have different payloadType values are considered different types of SEI messages. Additionally, different SEI messages that have the same payloadType value but are differentiated by values of syntax elements in the SEI payload are considered different types of SEI messages. Such differentiation by values of syntax elements in the SEI payload is to be performed by comparing values sent using po_sei_prefix_data_bit[ i ][ j ] syntax elements (when present) or values sent as SEI messages within a processing order nesting SEI message (when present). For example, neural-network post-filter characteristics (NNPFC) SEI messages can be differentiated by having different nnpfc_id values.

When an SEI message of a particular payloadType value is included in an sei processing order SEI message without prefix information and there is another SEI message with the same payloadType value and has prefix information included in an sei processing order SEI message, i.e., in the same or different sei processing order SEI message, the two SEI messages are considered different SEI messages.

### Embodiment 3

Embodiment 3 provides an explanation of Summary described above.

The semantics of the SEI processing order SEI message uses the concept of types of SEI messages. SEI messages that have different payloadType values are considered different types of SEI messages. Additionally, different SEI messages that have the same payloadType value but are differentiated by values of syntax elements in the SEI payload are considered different types of SEI messages. Such differentiation by values of syntax elements in the SEI payload is to be performed by comparing values sent using po_sei_prefix_data_bit[ i ][ j ] syntax elements (when present) or values sent as SEI messages within a processing order nesting SEI message (when present). For example, neural-network post-filter characteristics (NNPFC) SEI messages can be differentiated by having different nnpfc_id values.

When an SEI message of a particular payloadType value is included in an sei processing order SEI message without prefix information and there are two or more SEI messages with the same payloadType value and have prefix information included in an sei processing order SEI message, i.e., in the same or different sei processing order SEI message, the SEI messages with prefix information present are considered part of the SEI message without prefix information and both of the following apply:
- The sei processing order SEI message that contains the SEI messages with prefix information shall not contain SEI message with other payload type.
- The SEI message with no prefix information and the SEI messages with prefix information shall not be included in the same sei processing order SEI message.

As described above, SEI processing order information (or an SEI processing order SEI message) may include information on a processing order for a group of types of SEI messages. With regard to types of SEI messages, SEI messages having different payload types may be classified as different types of SEI messages, and SEI messages having the same payload type may be classified as different types of SEI messages in accordance with prefix information.

On the other hand, SEI messages having the same payload type are not clearly classified as SEI messages with prefix information and SEI messages without prefix information. For this reason, confusion may arise in the processing of SEI processing order information (or an SEI processing order SEI message).

To address this problem, the present disclosure proposes constraints on SEI messages with prefix information and SEI messages without prefix information. In addition, alternatively, criteria for distinguishing between SEI messages with prefix information and SEI messages without prefix information are proposed.

In the present disclosure, among SEI messages having the same payload type, SEI messages with prefix information and SEI messages without prefix information are not included in an SEI processing order SEI message in the same CLVS. Accordingly, it is possible to resolve uncertainty that may be present in the processing order of an SEI message with prefix information and an SEI message without prefix information.

Alternatively, according to the present disclosure, when an SEI message with prefix information and an SEI message without prefix information among SEI messages having the same payload type are included in an SEI processing order SEI message in the same CLVS, the SEI message with prefix information and the SEI message without prefix information may be handled as different types in connection with processing order. Accordingly, it is possible to resolve uncertainty that may be present in the processing order of an SEI message with prefix information and an SEI message without prefix information.

Alternatively, according to the present disclosure, when an SEI message with prefix information and an SEI message without prefix information among SEI messages having the same payload type are included in an SEI processing order SEI message in the same CLVS, the SEI message with prefix information and the SEI message without prefix information may be included in different SEI processing order SEI messages. Accordingly, it is possible to resolve uncertainty that may be present in the processing order of an SEI message with prefix information and an SEI message without prefix information.

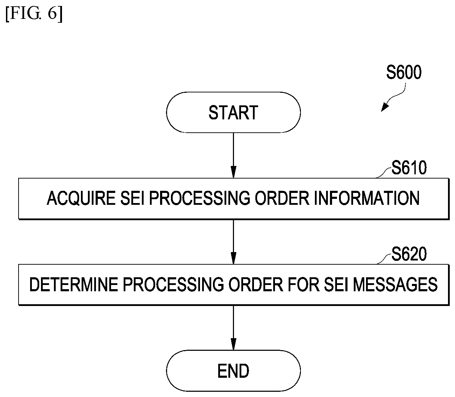

FIG. 6 is a flowchart illustrating a method of decoding image information according to an embodiment of the present disclosure.

The terms or names (e.g., names of syntax elements, names of variables, or the like) shown in FIG. 6 are merely exemplary, and the technical features of the present disclosure are not limited to the terms or the like shown in FIG. 6. For example, image information described in FIG. 6 may include various information according to embodiments described in the present disclosure and may include information shown in at least one of the above-described tables.

A decoding method S600 may include the following operations. The following operations are not essential elements of the decoding method according to the embodiment, and at least some of the following operations may be omitted or other operations may be added. In addition, the following operations may be executed by a decoding device including a memory and a processor electrically connected to the memory, and may be executed by, for example, the processor.

The decoding device may acquire SEI processing order information (S610).

As an example, the processor of the decoding device may acquire image information including SEI processing order information. The image information acquired by the processor may include SEI processing order information.

The SEI processing order information may include information on a processing order for a group of types of SEI messages that may be present in a CVS or CLVS.

The SEI processing order information may have various forms and may be referred to by various names. For example, the SEI processing order information may be a syntax element or a syntax structure including one or more syntax elements. In addition, the SEI processing order information may be an RBSP including one or more syntax elements or one or more syntax structures. For example, the SEI processing order information may be referred to as sei_processing_order() or the like but is not limited thereto.

The SEI processing order information may include wrapping information, payload type information, prefix information, prefix present information, and/or processing order information.

The wrapping information may indicate whether processing order nesting information includes information indicating a processing order for SEI message types corresponding to the wrapping information. For example, a value of the wrapping information equal to 1 may specify that the processing order nesting information includes information indicating the processing order for the SEI message types corresponding to the wrapping information. Also, a value of the wrapping information equal to 0 may specify that the processing order nesting information does not include information indicating the processing order for the SEI message types corresponding to the wrapping information. However, the present disclosure is not limited thereto, and alternatively, the meaning of the wrapping information equal to 1 and the meaning of the wrapping information equal to 0 may be switched.

The wrapping information may have various forms and may be referred to by various names. For example, the wrapping information may be a syntax element or a syntax structure including one or more syntax elements. As an example, the wrapping information which is a syntax element may be a wrapping flag of 1 bit or a wrapping indicator of 2 or more bits. The wrapping information which is a syntax element may be referred to as po_sei_wrapping_flag[i] or the like but is not limited thereto.

The payload type information may indicate a type of SEI message. For example, the payload type information may specify a payloadType value of an SEI message.

The payload type information may have various forms and may be referred to by various names. For example, the payload type information may be a syntax element or a syntax structure including one or more syntax elements. As an example, the payload type information may be referred to as po_sei_payload_type[i] or the like but is not limited thereto.

The prefix information may include one or more SEI prefix indications for a corresponding type of SEI message. Each SEI prefix indication is a bit string that follows the SEI payload syntax of a payloadType value, and contains multiple complete syntax elements starting from the first syntax element in the SEI payload.

The prefix information may include bit count information of a prefix indication and prefix data bits. The bit count information of a prefix indication and the prefix data bits may have various forms and may be referred to by various names. For example, each of the bit count information of a prefix indication and the prefix data bits may be a syntax element or a syntax structure including one or more syntax elements. As an example, the bit count information of a prefix indication may be referred to as po_num_bits_in_prefix_indication_minus1[i], and the prefix data bits may be referred to as po_sei_prefix_data_bit[i], but the expressions are not limited thereto.

The prefix present information may indicate whether prefix information corresponding to a corresponding type of SEI message is present. In other words, the prefix present information may indicate whether bit count information of a prefix indication and prefix data bits corresponding to a corresponding type of SEI message are present. For example, a value of the prefix present information equal to 1 may specify that prefix information corresponding to the corresponding type of SEI message is present. Also, a value of the prefix present information equal to 0 may specify that prefix information corresponding to the corresponding type of SEI message is not present. However, the present disclosure is not limited thereto, and alternatively, the meaning of the prefix present information equal to 1 and the meaning of the prefix present information equal to 0 may be switched.

The prefix present information may have various forms and may be referred to by various names. For example, the prefix present information may be a syntax element or a syntax structure including one or more syntax elements. As an example, the prefix present information which is a syntax element may be a prefix present flag of 1 bit or a prefix present indicator of 2 or more bits. The prefix present information which is a syntax element may be referred to as po_sei_prefix_flag[i] or the like but is not limited thereto.

The processing order information may indicate a processing turn of a corresponding type of SEI message. With a lower value of processing order information for a specific type, the specific type of SEI message may be processed earlier. In other words, when a value of processing order information for a first type is smaller than a value of processing order information for a second type, the first type of SEI message may be processed before the second type of SEI message.

The processing order information may have various forms and may be referred to by various names. For example, the processing order information may be a syntax element or a syntax structure including one or more syntax elements. As an example, the processing order information may be referred to as po_sei_processing_order[i] or the like but is not limited thereto.

The image information acquired by the processor may further include the processing order nesting information.

The processing order nesting information may include information on the processing order for the types of SEI messages and may be associated with specific SEI processing order information. In addition, the processing order nesting information may be only applied to a part of a processing chain that is identified from the associated SEI processing order information.

The processing order nesting information may have various forms and may be referred to by various names. For example, the processing order nesting information may be a syntax element or a syntax structure including one or more syntax elements. In addition, the processing order nesting information may be an RBSP including one or more syntax elements or one or more syntax structures. For example, the processing order nesting information may be referred to as processing_order_nesting() or the like but is not limited thereto.

The processing order nesting information may include nesting order information.

The nesting order information may specify a position of an SEI message in a processing order defined in associated processing order information.

The nesting order information may have various forms and may be referred to by various names. For example, the nesting order information may be a syntax element or a syntax structure including one or more syntax elements. For example, the nesting order information may be referred to as pon_processing_order[i] or the like but is not limited thereto.

Here, SEI messages having different payloadType values are considered different types of SEI messages. In addition, different SEI messages that have the same payloadType value but are differentiated by values of syntax elements in the SEI payloads are considered different types of SEI messages. Such differentiation by values of syntax elements in the SEI payloads may be performed on the basis of the prefix information and/or the processing order nesting information.

SEI messages that have the same payloadType value and are undifferentiable by values of syntax elements in the SEI payloads are not included in one piece or two or more pieces of SEI processing order information in the same CLVS. In other words, information on a processing order for SEI messages that have the same payloadType value and are undifferentiable by values of syntax elements in the SEI payloads is not included in SEI processing order information.

For example, when a specific SEI message of a specific type without prefix information is included in SEI processing order information, another SEI message of the specific type with prefix information is not included in the SEI processing order information or SEI processing order information included in the current CLVS other than the SEI processing order information. In other words, when information on a processing turn of a specific SEI message of a specific type without prefix information is included in SEI processing order information, information on a processing turn of another SEI message of the specific type with prefix information is not included in the SEI processing order information or SEI processing order information included in the current CLVS other than the SEI processing order information.

As another example, when a specific SEI message of a specific type without prefix information that is not included in the processing order nesting information is included in SEI processing order information, another SEI message of the specific type with prefix information that is not included in the processing order nesting information is not included in the SEI processing order information or SEI processing order information included in the current CLVS other than the SEI processing order information. In other words, when processing turn information of a specific SEI message of a specific type without prefix information of which the processing turn information is not included in the processing order nesting information is included in SEI processing order information, processing turn information of another SEI message of the specific type with prefix information of which the processing turn information is not included in the processing order nesting information is not included in the SEI processing order information or SEI processing order information included in the current CLVS other than the SEI processing order information.

When SEI messages that have the same payloadType value and are undifferentiable by values of syntax elements in the SEI payloads are included in one piece or two or more pieces of SEI processing order information in the same CLVS, processing turns of the undifferentiable SEI messages may be independently handled.

When SEI messages that have the same payloadType value and are undifferentiable by values of syntax elements in the SEI payloads are included in one piece or two or more pieces of SEI processing order information in the same CLVS, processing turns of the undifferentiable SEI messages may be included in different SEI processing order information.

The decoding device may determine a processing order for SEI messages (S620).

As an example, the processor of the decoding device may determine a processing order for SEI messages on the basis of the SEI processing order information. The processor may determine a processing order for the group of the types of SEI messages on the basis of the processing order information included in the SEI processing order information. In addition, the processor may process SEI messages in the determined processing order.

As described above, SEI messages that have the same payloadType value and are undifferentiable by values of syntax elements in the SEI payloads are not included in one piece or two or more pieces of SEI processing order information in the same CLVS. Accordingly, when an encoding device and/or decoding device handles SEI processing order information, it is possible to avoid potential complexity/delay.

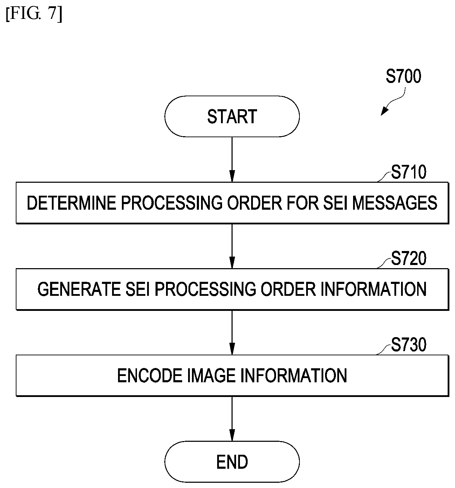

FIG. 7 is a flowchart illustrating a method of encoding image information according to an embodiment of the present disclosure.

The terms or names (e.g., names of syntax elements, names of variables, or the like) shown in FIG. 7 are merely exemplary, and the technical features of the present disclosure are not limited to the terms or the like shown in FIG. 7. For example, image information described in FIG. 7 may include various information according to embodiments described in the present disclosure and may include information shown in at least one of the above-described tables.

An encoding method S700 may include the following operations. The following operations are not essential elements of the encoding method according to the embodiment, and at least some of the following operations may be omitted or other operations may be added. In addition, the following operations may be executed by an encoding device including a memory and a processor electrically connected to the memory, and may be executed by, for example, the processor.

The encoding device may determine a processing order for SEI messages (S710).

For example, the processor of the encoding device may determine a processing order for a group of types of SEI messages.

The encoding device may generate SEI processing order information (S720).

For example, the processor of the encoding device may generate SEI processing order information on the basis of the processing order for the group of the types of SEI messages.

The SEI processing order information may include information on a processing order for a group of types of SEI messages that may be present in a CVS or CLVS.

The SEI processing order information may have various forms and may be referred to by various names. For example, the SEI processing order information may be a syntax element or a syntax structure including one or more syntax elements. In addition, the SEI processing order information may be an RBSP including one or more syntax elements or one or more syntax structures. For example, the SEI processing order information may be referred to as sei_processing_order() or the like but is not limited thereto.

The SEI processing order information may include wrapping information, payload type information, prefix information, prefix present information, and/or processing order information.

The wrapping information may indicate whether processing order nesting information includes information indicating a processing order for SEI message types corresponding to the wrapping information. For example, a value of the wrapping information equal to 1 may specify that the processing order nesting information includes information indicating the processing order for the SEI message types corresponding to the wrapping information. Also, a value of the wrapping information equal to 0 may specify that the processing order nesting information does not include information indicating the processing order for the SEI message types corresponding to the wrapping information. However, the present disclosure is not limited thereto, and alternatively, the meaning of the wrapping information equal to 1 and the meaning of the wrapping information equal to 0 may be switched.

The wrapping information may have various forms and may be referred to by various names. For example, the wrapping information may be a syntax element or a syntax structure including one or more syntax elements. As an example, the wrapping information which is a syntax element may be a wrapping flag of 1 bit or a wrapping indicator of 2 or more bits. The wrapping information which is a syntax element may be referred to as po_sei_wrapping_flag[i] or the like but is not limited thereto.

The payload type information may indicate a type of SEI message. For example, the payload type information may specify a payloadType value of an SEI message.

The payload type information may have various forms and may be referred to by various names. For example, the payload type information may be a syntax element or a syntax structure including one or more syntax elements. As an example, the payload type information may be referred to as po_sei_payload_type[i] or the like but is not limited thereto.

The prefix information may include one or more SEI prefix indications for a corresponding type of SEI message. Each SEI prefix indication is a bit string that follows the SEI payload syntax of a payloadType value, and contains multiple complete syntax elements starting from the first syntax element in the SEI payload.

The prefix information may include bit count information of a prefix indication and prefix data bits. The bit count information of a prefix indication and the prefix data bits may have various forms and may be referred to by various names. For example, each of the bit count information of a prefix indication and the prefix data bits may be a syntax element or a syntax structure including one or more syntax elements. As an example, the bit count information of a prefix indication may be referred to as po_num_bits_in_prefix_indication_minus1[i], and the prefix data bits may be referred to as po_sei_prefix_data_bit[i], but the expressions are not limited thereto.

The prefix present information may indicate whether prefix information corresponding to a corresponding type of SEI message is present. In other words, the prefix present information may indicate whether bit count information of a prefix indication and prefix data bits corresponding to a corresponding type of SEI message are present. For example, a value of the prefix present information equal to 1 may specify that prefix information corresponding to the corresponding type of SEI message is present. Also, a value of the prefix present information equal to 0 may specify that prefix information corresponding to the corresponding type of SEI message is not present. However, the present disclosure is not limited thereto, and alternatively, the meaning of the prefix present information equal to 1 and the meaning of the prefix present information equal to 0 may be switched.

The prefix present information may have various forms and may be referred to by various names. For example, the prefix present information may be a syntax element or a syntax structure including one or more syntax elements. As an example, the prefix present information which is a syntax element may be a prefix present flag of 1 bit or a prefix present indicator of 2 or more bits. The prefix present information which is a syntax element may be referred to as po_sei_prefix_flag[i] or the like but is not limited thereto.

The processing order information may indicate a processing turn of a corresponding type of SEI message. With a lower value of processing order information for a specific type, the specific type of SEI message may be processed earlier. In other words, when a value of processing order information for a first type is smaller than a value of processing order information for a second type, the first type of SEI message may be processed before the second type of SEI message.

The processing order information may have various forms and may be referred to by various names. For example, the processing order information may be a syntax element or a syntax structure including one or more syntax elements. As an example, the processing order information may be referred to as po_sei_processing_order[i] or the like but is not limited thereto.

The processor of the encoder device may additionally generate the processing order nesting information on the basis of the processing order for the group of the types of SEI messages.

The processing order nesting information may include information on the processing order for the types of SEI messages and may be associated with specific SEI processing order information. In addition, the processing order nesting information may be only applied to a part of a processing chain that is identified from the associated SEI processing order information.

The processing order nesting information may have various forms and may be referred to by various names. For example, the processing order nesting information may be a syntax element or a syntax structure including one or more syntax elements. In addition, the processing order nesting information may be an RBSP including one or more syntax elements or one or more syntax structures. For example, the processing order nesting information may be referred to as processing_order_nesting() or the like but is not limited thereto.

The processing order nesting information may include nesting order information.

The nesting order information may specify a position of an SEI message in a processing order defined in associated processing order information.

The nesting order information may have various forms and may be referred to by various names. For example, the nesting order information may be a syntax element or a syntax structure including one or more syntax elements. For example, the nesting order information may be referred to as pon_processing_order[i] or the like but is not limited thereto.

Here, SEI messages having different payloadType values are considered different types of SEI messages. In addition, different SEI messages that have the same payloadType value but are differentiated by values of syntax elements in the SEI payloads are considered different types of SEI messages. Such differentiation by values of syntax elements in the SEI payloads may be performed on the basis of the prefix information and/or the processing order nesting information.

SEI messages that have the same payloadType value and are undifferentiable by values of syntax elements in the SEI payloads are not included in one piece or two or more pieces of SEI processing order information in the same CLVS. In other words, information on a processing order for SEI messages that have the same payloadType value and are undifferentiable by values of syntax elements in the SEI payloads is not included in SEI processing order information.

For example, when a specific SEI message of a specific type without prefix information is included in SEI processing order information, another SEI message of the specific type with prefix information is not included in the SEI processing order information or SEI processing order information included in the current CLVS other than the SEI processing order information. In other words, when information on a processing turn of a specific SEI message of a specific type without prefix information is included in SEI processing order information, information on a processing turn of another SEI message of the specific type with prefix information is not included in the SEI processing order information or SEI processing order information included in the current CLVS other than the SEI processing order information.

As another example, when a specific SEI message of a specific type without prefix information that is not included in the processing order nesting information is included in SEI processing order information, another SEI message of the specific type with prefix information that is not included in the processing order nesting information is not included in the SEI processing order information or SEI processing order information included in the current CLVS other than the SEI processing order information. In other words, when processing turn information of a specific SEI message of a specific type without prefix information of which the processing turn information is not included in the processing order nesting information is included in SEI processing order information, processing turn information of another SEI message of the specific type with prefix information of which the processing turn information is not included in the processing order nesting information is not included in the SEI processing order information or SEI processing order information included in the current CLVS other than the SEI processing order information.

When SEI messages that have the same payloadType value and are undifferentiable by values of syntax elements in the SEI payloads are included in one piece or two or more pieces of SEI processing order information in the same CLVS, processing turns of the undifferentiable SEI messages may be independently handled.

When SEI messages that have the same payloadType value and are undifferentiable by values of syntax elements in the SEI payloads are included in one piece or two or more pieces of SEI processing order information in the same CLVS, processing turns of the undifferentiable SEI messages may be included in different SEI processing order information.

The encoding device may encode the image information including the SEI processing order information (S730).

As an example, the processor of the encoding device may encode the image information including the SEI processing order information.

As described above, SEI messages that have the same payloadType value and are undifferentiable by values of syntax elements in the SEI payloads are not included in one piece or two or more pieces of SEI processing order information in the same CLVS. Accordingly, when an encoding device and/or decoding device handles SEI processing order information, it is possible to avoid potential complexity/delay.

The image information encoded according to the above-described encoding method S700 that includes the SEI processing order information may be stored in a computer-readable storage medium. The image information including the SEI processing order information may be transmitted through a transmitter and/or a transmission medium.

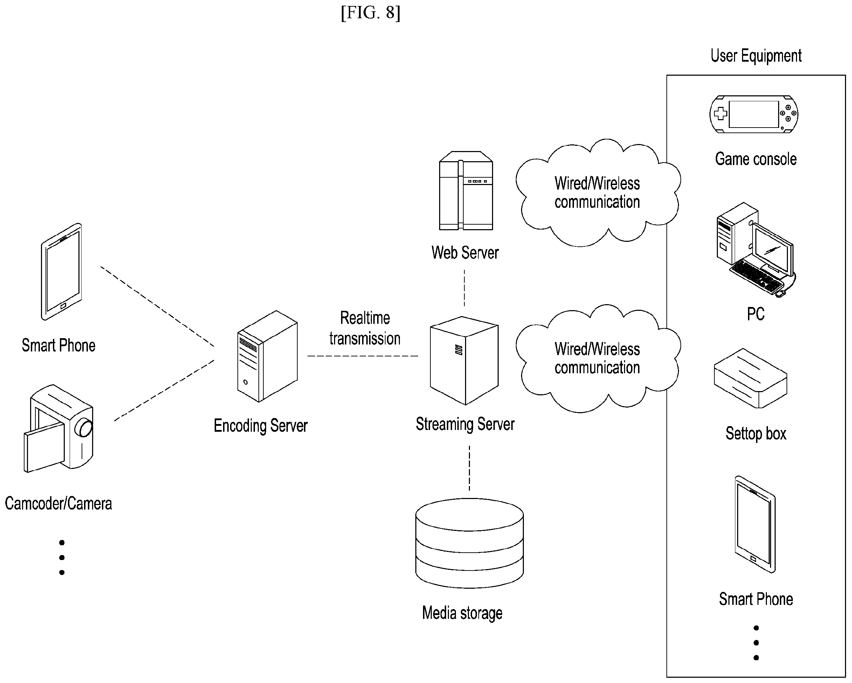

FIG. 8 is a diagram exemplifying a content streaming system to which an embodiment according to the present disclosure can be applied.

Referring to Fig. 8, the content streaming system to which the embodiment(s) of the present document is applied may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmit the bitstream to the streaming server. As another example, when the multimedia input devices such as smartphones, cameras, camcorders, etc. directly generate a bitstream, the encoding server may be omitted.

The bitstream may be generated by an encoding method or a bitstream generating method to which the embodiment(s) of the present document is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server delivers it to a streaming server, and the streaming server transmits multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (ex. smartwatches, smart glasses, head mounted displays), digital TVs, desktops computer, digital signage, and the like.

Each server in the content streaming system may be operated as a distributed server, in which case data received from each server may be distributed.

The scope of the present disclosure includes software or machine-executable instructions (e.g., an operating system, an application, firmware, a program, etc.) that cause operations according to various embodiments of the present disclosure to be executed on a device or a computer, and a non-transitory computer-readable medium having such software or instructions stored thereon and being executable on the device or the computer.

### [Industrial Applicability]

The embodiment according to the present disclosure can be used to encode/decode images.

## Claims

1. A method for decoding image information, the method comprising:
obtaining the image information including supplemental enhancement information (SEI) processing order information indicating a processing order for a group of types of SEI messages; and
determining the processing order based on the SEI processing order information,
wherein the SEI processing order information includes payload type information indicating a type of an SEI message, prefix present information indicating whether prefix information of the SEI message is present or not, and processing order information indicating the processing order for the type of the SEI message, and
wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

2. The method of claim 1, wherein the image information further includes processing order nesting information including position information of a specific SEI message within the processing order defined by the SEI processing order information, and
wherein, when a SEI message whose prefix information is not present and type is a first type and which is not included in the processing order nesting information is included in SEI processing order information, no other SEI message whose prefix information is present and type is the first type and which is not included in the processing order nesting information is included in the SEI processing order information or the other SEI processing order information different from the SEI processing order information in the current CLVS.

3. The method of claim 2, wherein, when a first SEI message whose prefix information is not present and type is a first type and which is not included in the processing order nesting information is included in SEI processing order information and a second SEI message whose prefix information is present and type is the first type and which is not included in the processing order nesting information is included in the SEI processing order information or the other SEI processing order information different from the SEI processing order information in the current CLVS, the first SEI message whose prefix information is not present and the second SEI message whose prefix information is present are treated independently.

4. The method of claim 3, wherein the second SEI message whose prefix information is present is excluded from a group of the first type of the first SEI message whose prefix information is not present.

5. The method of claim 2, wherein, when a first SEI message whose prefix information is not present and type is a first type and which is not included in the processing order nesting information is included in SEI processing order information and a second SEI message whose prefix information is present and type is the first type and which is not included in the processing order nesting information is included in the SEI processing order information or the other SEI processing order information different from the SEI processing order information in the current CLVS, the second SEI message whose prefix information is present is treated as a part of the first SEI message whose prefix information is not present.

6. The method of claim 5, wherein the second SEI message whose prefix information is present is included in the other SEI processing order information different from the SEI processing order information which includes the first SEI message whose prefix information is not present.

7. A method for encoding image information, the method comprising:
determining a processing order for a group of types of supplemental enhancement information (SEI) messages;
generating SEI processing order information based on the processing order; and
encoding the image information including the SEI processing order information,
wherein the SEI processing order information includes payload type information indicating a type of an SEI message, prefix present information indicating whether prefix information of the SEI message is present or not, and processing order information indicating the processing order for the type of the SEI message, and
wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

8. A method for storing a bitstream of image information in a non-transitory computer-readable storage medium, the method comprising:
obtaining the image information including supplemental enhancement information (SEI) processing order information indicating a processing order for a group of types of SEI messages; and
storing data including the bitstream,
wherein the SEI processing order information includes payload type information indicating a type of an SEI message, prefix present information indicating whether prefix information of the SEI message is present or not, and processing order information indicating the processing order for the type of the SEI message, and
wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).

9. A method for transmitting a bitstream of image information, the method comprising:
obtaining the image information including supplemental enhancement information (SEI) processing order information indicating a processing order for a group of types of SEI messages; and
transmitting data including the bitstream,
wherein the SEI processing order information includes payload type information indicating a type of an SEI message, prefix present information indicating whether prefix information of the SEI message is present or not, and processing order information indicating the processing order for the type of the SEI message, and
wherein, when a SEI message whose prefix information is not present and type is a first type is included in SEI processing order information, no other SEI message whose prefix information is present and type is the first type is included in the SEI processing order information or other SEI processing order information different from the SEI processing order information in a current coded layer video sequence (CLVS).
